# EUROPEAN PATENT APPLICATION

(11) **EP 1 825 900 A2**
(43) Date of publication of application: **29.08.2007**
(21) Application number: 07290079.8
(22) Date of filing: 22.01.2007
(51) Int. Cl.: B01D 39/20

(54) **Honeycomb structured body, method for manufacturing honeycomb structured body and exhaust gas purifying device**

(30) Priority: 27.01.2006 JP 2006018587
(71) Applicant: IBIDEN CO., LTD., Gifu Okagi 503-0695 (JP)
(72) Inventor: Oya, Tomokazu, 501-0695 Gifu (JP); Kasuga, Takafumi, 501-0695 Gifu (JP); Ohno, Kazushige, 501-0695 Gifu (JP)
(74) Representative: Uchida, Kenji

(57) **Abstract**

An object of the present invention is to provide a honeycomb structured body, in which generation of a temperature difference in the longitudinal direction (lamination direction) can be restrained by making the quantity of generated heat smaller, and thereby generation of damages such as melting loss (molten erosion) and cracks in the honeycomb structured body can be prevented even when a forced regenerating process is carried out within a fixed time so as to dispose of PMs deposited on the inside of the filter (honeycomb structured body). The honeycomb structured body of the present invention is a pillar-shaped honeycomb structured body in which a plurality of cells, separated from each other by a cell wall, are formed in a longitudinal direction, wherein, when the honeycomb structured body is divided into two portions by a plane in parallel with either one of end faces in the longitudinal direction of the honeycomb structured body so that apparent volumes of the respective two portions become equal to each other, the respective two portions have apparent densities different from each other.

## Description

### TECHNICAL FIELD

This application claims priority of Japanese Patent Application No. 2006-018587 filed on January 27, 2006 and PCT/JP2006/323122 filed on November 20, 2006.
The present invention relates to a honeycomb structured body used for purifying exhaust gases discharged from an internal combustion system such as a diesel engine, a method for manufacturing such a honeycomb structured body and an exhaust gas purifying device used for purifying particulate matters (hereinafter, also referred to as PMs) in the exhaust gases.

### BACKGROUND ART

PMs such as soot are contained in exhaust gases discharged from combustion systems such as diesel engines, and in recent years, these PMs have raised serious problems as contaminants harmful to the environment and the human body.
Various filters which use ceramic honeycomb filters made from ceramic materials such as cordierite and silicon carbide have been proposed as filters that capture PMs in exhaust gases and purify the exhaust gases. Moreover, various filters, which use honeycomb structured bodies constituted by laminating piling members which have cells, have been proposed (for example, see Patent Documents 1 and 2).

In general, those filters using such honeycomb structured bodies require a process (hereinafter, also referred to as regenerating process) used for regularly burning and removing PMs deposited inside the filter. With respect to the method of regenerating process, a post-injection system is mainly used, and also in this post-injection system, for example, a method in which an additive is put into a fuel and a method in which a catalyst, such as a noble metal catalyst and an oxide catalyst, is supported on a filter so as to easily burn PMs are used.
Moreover, PMs can be burned and eliminated by using a heating means such as a heater.

Patent Document 1: WO2005/00044 A1
Patent Document 2: WO2005/0050 A1

### DISCLOSURE OF THE INVENTION

### PROBLEMS TO BE SOLVED BY THE INVENTION

In the above-mentioned conventional honeycomb structured body, however, the degree of temperature rise is different depending on portions. More specifically, for example, heat generated from burning PMs is transmitted to the gas outlet side along the flow of exhaust gases, with the result that a temperature on the gas outlet side tends to become higher than that on the gas inlet side.
In a case where a great temperature difference occurs in the longitudinal direction of the filter due to an uneven temperature rise in the honeycomb structured body, a great thermal stress is exerted on the honeycomb structured body, resulting in damages such as cracks in the honeycomb structured body.

Moreover, some of honeycomb structured bodies are designed to have a high porosity in an attempt to improve the property of the continuous regenerating process and the like. In this case, the thermal capacity of the honeycomb structured body is small because of the high porosity, with the result that the temperature of the honeycomb structured body tends to become very high. When the honeycomb structured body of this kind is exposed to a high temperature, damages such as melting loss (molten erosion) tend to occur.

In contrast, when the porosity is lowered, the property of the continuous regenerating process deteriorates to cause a large amount of PMs deposited inside the honeycomb structured body even during the same treatment time as the structured body in which the porosity is not lowered. When a forced regenerating process is conducted at every fixed interval so as to dispose of the deposited PMs, the generated heat becomes greater to easily cause damages such as cracks even in a case of a low porosity (high porosity).
Moreover, when the regenerating process is carried out frequently, the generated heat becomes smaller so that damages are hardly caused; however, the problem with fuel costs is raised.

### MEANS FOR SOLVING THE PROBLEMS

In order to solve the above-mentioned problems, the inventors, etc. of the present invention have extensively studied and consequently found that in a pillar-shaped honeycomb structured body in which a plurality of cells, separated from each other by a cell wall, are formed in a longitudinal direction, with a gas allowed to pass through the inside thereof, for example, both of the portions on a gas inlet side and on a gas outlet side are designed to have apparent densities that are different from each other so that the generation of a temperature difference between the gas inlet side and the gas outlet side of the honeycomb structured body is restrained, thereby making it possible to make a thermal stress smaller, with the property of the continuous regenerating process property maintained; thus, a honeycomb structured body of the present invention has been completed.
In addition, a method for manufacturing the honeycomb structured body of this kind has been found.

In other words, a honeycomb structured body in accordance with a first aspect of the present invention is provided with: a pillar-shaped structure in which a plurality of cells, separated from each other by a cell wall, are formed in a longitudinal direction, and in this structure, when the honeycomb structured body is divided into two portions by a plane in parallel with either one of end faces of the honeycomb structured body in the longitudinal direction so that apparent volumes of the respective two portions become equal to each other, the respective two portions have apparent densities different from each other.

In the honeycomb structured body in accordance with the first aspect of the present invention, a ratio of the apparent density of one of the two portions to the apparent density of the other of the two portions is preferably set in the range of 1:1.1 to 1:6.0, and a catalyst is preferably supported thereon.
Preferably, the honeycomb structured body of the first aspect of the present invention mainly comprises inorganic fibers and/or metal.

Moreover, preferably, the above-mentioned honeycomb structured body further includes a plurality of piling members, each having a plurality of cells separated from each other by a cell wall, and is constituted by the piling members laminated so that the corresponding cells are superposed on one after another. Here, in the present specification, this mode is hereinafter referred to as a laminated honeycomb structured body.
In addition to the above-mentioned mode, the honeycomb structured body of the first aspect of the present invention may take a mode in which it is constituted by a single honeycomb member, another mode in which it is formed by a plurality of pillar-shaped honeycomb units, each having a plurality of cells that are separated from each other by a cell wall, and formed in the longitudinal direction, that are bonded to one another (hereinafter, referred to as an aggregated honeycomb structured body) and the other mode in which it is constituted by a single honeycomb unit (hereinafter, referred to as an integral honeycomb structured body).

The honeycomb structured body of the first aspect of the present invention preferably has a structure in which one of the two portions has a porosity in the range of 75 to 95% while the other of the two portions has a porosity in the range of 70 to 90%, and the porosity of one of the two portions is more than the porosity of the other of the two portions.

Moreover, in a case where the honeycomb structured body is prepared as the above-mentioned laminated honeycomb structured body, preferably, the piling member includes a piling member mainly comprising inorganic fibers and/or a piling member mainly comprising metal.
Furthermore, the honeycomb structured body of the first aspect of the present invention is preferably designed so that a member for an end portion having cells formed into a checkered pattern is placed on each of two ends of the honeycomb structured body.

The honeycomb structured body preferably has a structure in which: a gas is allowed to pass through the inside thereof, and one portion of the two portions is on a gas inlet side, while the other of the two portions is on a gas outlet side, and a ratio of the apparent density (dₐ) on the gas inlet side to the apparent density (d_{b}) on the gas outlet side is set in the range of 1:1.1 to 1:6.0, and a catalyst is preferably supported thereon. Preferably, the honeycomb structured body mainly comprises inorganic fibers and/or metal.

In the honeycomb structured body having different apparent densities respectively on the gas inlet side and on the gas outlet side, the following arrangements are preferably prepared: a catalyst is supported thereon; the honeycomb structured body is preferably constituted by a plurality of piling members, each having a plurality of cells separated from each other by a cell wall, that are laminated in such a manner that the corresponding cells are superposed on one after another; the portion on the gas inlet side has a porosity in the range of 75 to 95% while the other portion on the gas outlet side has a porosity in the range of 70 to 90%, and the porosity of the portion on the gas inlet side is more than the porosity of the other portion on the gas outlet side; and preferably, the piling member includes a piling member mainly comprising inorganic fibers and/or a piling member mainly comprising metal. Preferably, a member for an end portion having cells formed into a checkered pattern is placed on each of two ends of the honeycomb structured body.

A method for manufacturing a honeycomb structured body in accordance with a second aspect of the present invention comprises: preparing a plurality of piling members, each having a plurality of cells separated from each other by a cell wall; and laminating the piling members so that the corresponding cells of respective piling members are superposed on one after another, and in this method, before the lamination and/or after the lamination of the piling members, by compressing at least one portion of the piling members, the honeycomb structured body is manufactured.

A method for manufacturing a honeycomb structured body in accordance with a third aspect of the present invention comprises: preparing a plurality of piling members, each having a plurality of cells separated from each other by a cell wall; and laminating the piling members so that the corresponding cells of respective piling members are superposed on one after another, and in this method, upon laminating the piling members, by laminating piling members having a different porosity as at least one portion of the piling members, the honeycomb structured body is manufactured.

A method for manufacturing a honeycomb structured body in accordance with a fourth aspect of the present invention comprises: preparing a plurality of piling members, each having a plurality of cells separated from each other by a cell wall; and laminating the piling members so that the corresponding cells of respective piling members are superposed on one after another, and in this method, upon laminating the piling members, by laminating piling members having a different thickness of cell walls as at least one portion of the piling members, the honeycomb structured body is manufactured.

A method for manufacturing a honeycomb structured body in accordance with a fifth aspect of the present invention comprises: preparing a pillar-shaped honeycomb member in which a plurality of cells, separated from each other by a cell wall, are formed in a longitudinal direction; and compressing at least one portion of the pillar-shaped honeycomb member so that the honeycomb structured body is manufactured.

An exhaust gas purifying device in accordance with a sixth aspect of the present invention comprises the honeycomb structured body in accordance with the first aspect of the present invention installed in an exhaust gas passage.

### EFFECTS OF THE INVENTION

In accordance with the honeycomb structured body of the first aspect of the present invention, since the apparent densities of the respective two portions are made different from each other, even when a forced regenerating process is carried out within a fixed time so as to dispose of PMs deposited on the inside of the filter (honeycomb structured body), the generation of a temperature difference in the longitudinal direction (lamination direction in a case of a laminated honeycomb structured body) can be restrained by making the quantity of generated heat smaller, thereby making it possible to prevent the generation of damages such as melting loss (molten erosion) and cracks in the honeycomb structured body.

Moreover, in accordance with the methods for manufacturing a honeycomb structured body of the second to fifth aspects of the present invention, without the necessity of using complex processes, expensive devices, etc., by simply laminating and compressing piling members or compressing laminated piling members, in at least one portion of the piling members before the lamination and/or after the lamination of the piling members, or by simply laminating piling members having a different porosity or a different thickness of cell walls, or by compressing at least one portion of a honeycomb member, a honeycomb structured body in which the apparent densities of one of the two portions and the other of the two portions (the apparent density on the gas inlet side and the apparent density on the gas outlet side) are made different from each other can be manufactured efficiently.

Furthermore, in accordance with the exhaust gas purifying device of the sixth aspect of the present invention, since the honeycomb structured body in accordance with the first aspect of the present invention is installed in an exhaust gas passage, exhaust gases can be purified efficiently, and during a regenerating process, since an uneven temperature rise is not caused in the honeycomb structured body, it is possible to carry out the regenerating process, while preventing the occurrence of damages.

### BEST MODE FOR CARRYING OUT THE INVENTION

First, the following description will discuss the honeycomb structured body in accordance with the first aspect of the present invention. Here, since only the first aspect of the present invention relates to a honeycomb structured body, the honeycomb structured body in accordance with the first aspect of the present invention is simply referred to as the honeycomb structured body of the present invention in the following description.

The honeycomb structured body of the present invention is a pillar-shaped honeycomb structured body in which a plurality of cells, separated from each other by a cell wall, are formed in the longitudinal direction, and in this structure, when the honeycomb structured body is divided into two portions by a plane in parallel with either one of end faces of the honeycomb structured body in the longitudinal direction so that apparent volumes of the respective two portions become equal to each other, the respective two portions have apparent densities different from each other.

The honeycomb structured body has a pillar-shaped body with two end faces in the longitudinal direction. In the honeycomb structured body of the present invention, when the honeycomb structured body is divided into two portions by a plane in parallel with either one of the two end faces, the respective two portions have apparent densities different from each other.
In the present specification, the shape indicated by the word "pillar" refers to any desired shape of a pillar including a round pillar, an oval pillar, a polygonal pillar and the like.

The applications of the honeycomb structured body are not particularly limited, and it may be installed at a place other than a passage through which a gas is allowed to flow; however, in the following, a description will be given on the structure in which the honeycomb structured body is installed at the passage through which a gas is allowed to flow.

In other words, the honeycomb structured body is a pillar-shaped honeycomb structured body in which a plurality of cells, separated from each other by a cell wall, are formed in the longitudinal direction, with a gas allowed to pass through the inside thereof, wherein when the honeycomb structured body is divided into two portions on the gas inlet side and on the gas outlet side by a plane in parallel with either one of the end faces on the gas inlet side or on the gas outlet side of the honeycomb structured body so that the apparent volumes thereof become equal to each other, the apparent density on the gas inlet side and the apparent density on the gas outlet side are made different from each other.

The description that the honeycomb structured body is divided into two portions on the gas inlet side and on the gas outlet side by a plane in parallel with either one of the end faces on the gas inlet side or on the gas outlet side of the honeycomb structured body so that the apparent volumes thereof become equal to each other means that irrespective of whether the end face on the gas inlet side and the end face on the gas outlet side are in parallel with each other or not, the honeycomb structured body is divided into two equal portions on the gas inlet side and on the gas outlet side based on the apparent volume, by a plane in parallel with either one of the end faces. Here, in a case where the end face on the gas inlet side and the end face on the gas outlet side are in parallel with each other, any one of the end faces is used in the same manner as in the end face to be used for dividing the honeycomb structured body into two portions; however, in a case where the two end faces are not in parallel with each other, either one of the end faces is selected so that the respective two portions, obtained by dividing the honeycomb structured body into two portions, are made to have as close a shape as possible to each other.

Here, the apparent density on the gas inlet side refers to an apparent density of the entire portion on the gas inlet side of the honeycomb structured body, that is, the entire one of the two portions of the honeycomb structured body divided by a plane in parallel with either one of the end faces on the gas inlet side and on the gas outlet side so that the apparent volumes thereof become equal to each other. In other words, this refers to an apparent density of the entire gas inlet side, that is, the entire one divided portion obtained by dividing the honeycomb structured body into two portions, and the corresponding value is found by dividing the mass of the entire gas inlet side by the apparent volume.
Moreover, the apparent density on the gas outlet side refers to an apparent density of the entire portion of the honeycomb structured body on the gas inlet side, that is, the entire one of the two portions of the honeycomb structured body divided by a plane in parallel with either one of the end faces on the gas inlet side and the gas outlet side so that the apparent volumes thereof become equal to each other. In other words, this refers to an apparent density of the entire gas outlet side, that is, the entire one divided portion obtained by dividing the honeycomb structured body into two portions, and the corresponding value is found by dividing the mass of the entire gas outlet side by the apparent volume.
Here, in the present specification, the apparent volume refers to an apparent volume defined by the outermost shape of a subject portion, and means the total volume of the subject portion including spaces and openings such as the inner cells and pores thereof.

In the honeycomb structured body of the present invention, the apparent density on the gas inlet side and the apparent density on the gas outlet side are made different from each other.
In the honeycomb structured body of the present invention, it is only necessary to make the apparent density on the gas inlet side and the apparent density on the gas outlet side different from each other, and the means and method used for forming the different apparent densities are not particularly limited.

With respect to the means and method used for forming the different apparent densities, for example, a method by which the porosities are changed between the gas inlet side and the gas outlet side and a method by which the thicknesses are changed between these sides may be used. In particular, in a case of the laminated honeycomb structured body, with respect to the method used for changing the porosities, a method in which piling members are laminated on the gas inlet side and the gas outlet side, with their degrees of compression changed and a method in which piling members having different porosities are laminated between these sides may be used, and with respect to the method used or changing the thicknesses of the cell walls, for example, a method in which piling members having different thicknesses in the cell walls are laminated may be used.
By using these methods, which will be described later, the structural properties of the piling members are changed so that apparent densities at specific positions of the piling member aggregated body can be changed; thus, different apparent densities are prepared respectively on the gas inlet side and the gas outlet side of the honeycomb structured body in which the piling members are laminated. With respect to the method used for changing apparent densities, the same method can be used in both of the aggregated honeycomb structured body and the integral honeycomb structured body.

First, referring to Figures, the following description will discuss a specific mode which prepares different apparent densities between the gas inlet side and the gas outlet side by exemplifying the laminated honeycomb structured body prepared as the honeycomb structured body of the present invention. However, the mode of the laminated honeycomb structured body is not particularly limited to the following mode.

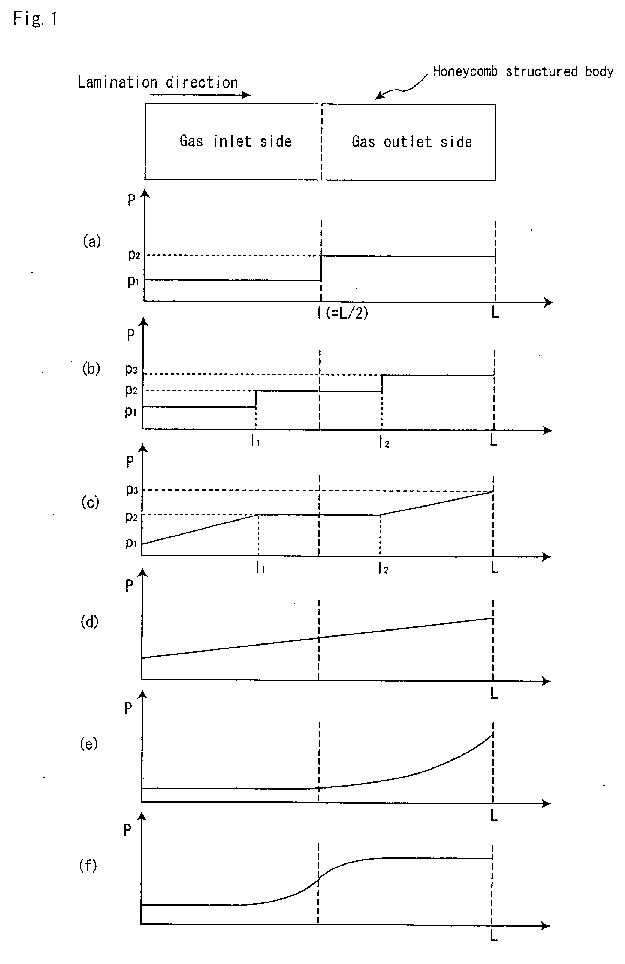

Figs. 1(a) to 1(f) are drawings that indicate, as two-dimensional graphs, modes in which the structural properties of piling members are varied so that apparent densities on the gas inlet side and the gas outlet side are made different from each other in a honeycomb structured body in accordance with the present invention.
In other words, as shown in Figs. 1(a) to 1(f), supposing that a direction from the end on the gas inlet side toward the end on the gas outlet side is defined as the lamination direction and that a distance between the end on the gas inlet side and the end on the gas outlet side is L, the position 1 (distance 1) from the end of the gas inlet side in the lamination direction is defined as the horizontal axis and a structural property P (for example, reciprocal of porosity; thickness of the cell wall; degree of compression of piling members in a case of the laminated honeycomb structured body; the value of which is represented by p) at any position 1 is defined as the longitudinal axis; thus, the relationship between the position 1 and the structural property p is plotted to form a two-dimensional graph, and referring to this, the following description will be given.

As shown in Fig. 1(a), with respect to the first mode, the following state is prepared: the structural property p on the gas inlet side is made constant (=p₁), and the structural property p on the gas outlet side is also made constant with a value (= p₂) that is different from the first structural property p, so that apparent densities on the gas inlet side and the gas outlet side are made different from each other as a whole.
In a case of the first mode shown in Fig. 1(a), the position at which the structural property p changes from p₁ to p₂ corresponds to the border between the gas inlet side and the gas outlet side; that is, 1 = L/2 holds (the middle point between the end on the gas inlet side and the end on the gas outlet side) ; however, not limited to this position, any position other than 1 = L/2 may be used. At any position, the apparent density on the gas inlet side and the apparent density on the gas outlet side are made different from each other.

In the first mode, the structural property p is changed in the lamination direction from p₁ to p₂, in two stages; however, not limited to the two stages, the changes in the structural property p may take place in multiple stages of three stages or more.
More specifically, Fig. 1 (b) shows a second mode in which the changes in the structural property p take place in three stages. As shown in Fig. 1 (b), at each of the positions l₁ and l₂ at which the sizes (distances) are indicated by l₁ < l₂, the structural property p changes from p₁ to p₂, and from p₂ to p₃.
Moreover, between the end on the gas inlet side and position l₁, the structural property is maintained at a constant value, p₁; between position l₁ and position l₂, it is maintained at a constant value, p₂; and between position l₂ and the end on the gas outlet side, it is maintained at a constant value, P₃.
Also in this case, the apparent density on the gas inlet side and the apparent density on the gas outlet side are made different from each other.

In the same manner as in the first mode, the positions at which the structural property changes are not limited to l₁ and l₂, and may be placed at any desired positions. Moreover, the structural property may be changed in four stages, that is, p₁ to p₄, or may be changed in multiple stages of four or more stages.

Next, Fig. 1(c) shows a third mode.
In Fig. 1(c), the structural property at the end on the gas inlet side is indicated by p₁, and the structural property p is continuously changed to the structural property p₂ at position l₁. Between positions l₁ and l₂ that form adjacent areas, the structural property is maintained constant at p₂, and next, the structural property is continuously changed from p₂ at position l₂ to p₃ at the end on the gas outlet side. Also in the third mode, positions l₁ and l₂ may be desirably determined.
Moreover, in the third mode, the structural property p may be made constant from the end on the gas inlet side to position l₁, while being changed (for example, increased) continuously from position l₁ to position l₂, and may again be made constant from position l₂ to the end on the gas outlet side.
In this manner, also in the third mode, the apparent density on the gas inlet side and the apparent density on the gas outlet side are made different from each other.

The first to third modes relate to modes in which the structural property is changed discontinuously; however, in contrast, the structural property may be changed not discontinuously, but continuously.
Figs. 1(d) to 1(f) exemplify a fourth mode in which the structural property is continuously changed from the end on the gas inlet side to the end on the gas outlet side.
In Fig. 1 (d), the structural property is changed linearly from the end on the gas inlet side to the end on the gas outlet side; in Fig. 1 (e), similarly, it is changed exponentially; and in Fig. 1(f), it is changed in a sigmoid functional manner. With respect to the mode in which the structural property is continuously changed from the end on the gas inlet side to the end on the gas outlet side, not limited to the above-mentioned modes as long as the apparent density on the gas inlet side and the apparent density on the gas outlet side are made different from each other, any mode in which the structural property is changed along any desired continuous curve, such as a quadratic function, a cubic function and a sine curve.

Referring to Figs. 1 (a) to 1(f), the first to fourth modes have been described as the mode in which the apparent density on the gas inlet side and the apparent density on the gas outlet side are made different from each other; however, not limited to the modes shown in Figs. 1(a) to 1(f), the honeycomb structured body of the present invention may have, for example, a structure in which the relative positions between the gas inlet side and the gas outlet side in Figs. 1(a) to 1(f) are exchanged. Moreover, in contrast to the mode in Figs. 1(a) to 1(f) in which the structural property increases from the end on the gas inlet side toward the end on the gas outlet side, the structural property may decrease, and may also have any desired change in which the increasing, constant, decreasing and other states are combined.
Moreover, an area in which the structural property is continuously changed and another area in which the structural property is discontinuously changed may be allowed to coexist, and the rate of changes thereof may also be set to any rate of change.

In addition, with respect to the kinds of changes in the structural property used for preparing different apparent densities, a change in the single structural property (for example, only the porosity or the like) over the entire honeycomb structured body of the present invention may be used, or a change in combination (for example, a combination of the porosity and the thickness of the cell walls) with a plurality of kinds of structural properties may be used. In any one of the cases, it is possible to prepare different apparent densities on the gas inlet side and the gas outlet side.

Here, with respect to the shape of the entire honeycomb structured body of the present invention, for example, in a case of the laminated honeycomb structured body, any desired shape, such as a round pillar shape in which piling members are laminated in a direction perpendicular to the longitudinal direction and an inclined round pillar shape which is obtained by laminating piling members in a manner so as to incline at a predetermined angle from the direction perpendicular to the longitudinal direction, may be used depending on the lamination direction of the piling members. With respect to the other shapes of the entire honey structured body, not particularly limited, various shapes, such as an oval pillar shape, a rectangular pillar shape and a polygonal pillar shape, as well as an inclined shape thereof, may be used, regardless of the kinds of the honeycomb structured body.

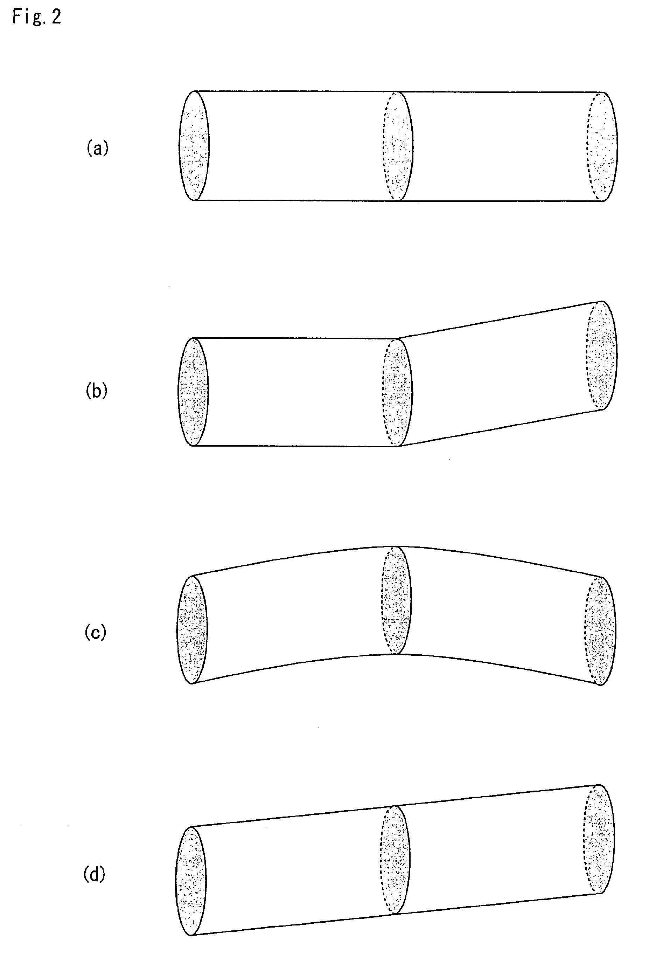

Figs. 2(a) to 2(d) are perspective projection views that schematically show respective honeycomb structured bodies each of which is divided into two portions on the gas inlet side and on the gas outlet side so as to make apparent volumes in the portions equal to each other, in a case where the lamination directions of piling members constituting each of the laminated honeycomb structured bodies of the present invention are different from one another. The modes for the two divisions shown in Figs. 2(a) to 2(d) may be applied not only to the laminated honeycomb structured body, but also to the aggregated or the integral honeycomb structured body.

Fig. 2(a) is a drawing that shows two divided portions of the honeycomb structured body of the present invention in which the lamination direction is set to a direction perpendicular to the end portion of the piling members. The honeycomb structured body in a round pillar shape is divided into two portions so that the respective portions divided by a plane in parallel with the end face are made to have equal apparent volumes. Moreover, in the honeycomb structured body shown in Fig. 2(b), the lamination direction, which has been kept in a direction perpendicular to the end face, is deflected to a direction (upward, in the Figure) having a predetermined angle with respect to the perpendicular direction, from a position at which the respective portions divided by a plane in parallel with the end face are made to have equal apparent volumes. At the above-mentioned deflected position, the honeycomb structured body of the present invention is divided into two portions so that the respective portions divided by the plane in parallel with the end face are made to have equal apparent volumes.

Furthermore, Fig. 2 (c) shows a honeycomb structured body in accordance with the present invention in which piling members are laminated so as to have a curved shape over the entire honeycomb structured body. Even in a case where the honeycomb structured body has a curved shape, the honeycomb structured body can be divided into two portions so that the respective portions divided by a plane in parallel with the end face are made to have equal apparent volumes. Fig. 2(d) shows a honeycomb structured body in accordance with the present invention which has a lamination direction at a predetermined angle from the direction perpendicular to the end face. The honeycomb structured body shown in Fig. 2(d) has an inclined round pillar shape, and even in this case, the honeycomb structured body can be divided into two portions so that the respective portions divided by a plane in parallel with the end face are made to have equal apparent volumes.

As described above, in the honeycomb structured body of the present invention, when the honeycomb structured body is divided into two portions by a plane in parallel with either one of the end faces on the gas inlet side and the gas outlet side so that the respective divided portions are made to have equal apparent volumes, the apparent density on the gas inlet side and the apparent density on the gas outlet side are made different from each other; therefore, even when a forced regenerating process is carried out so as to dispose of PMs deposited on the inside of the filter, the generation of a temperature difference in the longitudinal direction (direction from the gas inlet side to the gas outlet side)can be restrained by making the quantity of generated heat smaller, thereby making it possible to prevent the generation of damages such as melting loss (molten erosion) and cracks in the honeycomb structured body.

Additionally, in the laminated honeycomb structured body, since the structural property can be changed on the unit basis of the piling members constituting the honeycomb structured body so as to make the apparent density on the gas inlet side and the apparent density on the gas outlet side different from each other, the honeycomb structured body of the present invention is allowed to easily match a design change thereof.

In general, upon regenerating the honeycomb structured body, it is necessary to burn PMs through the aforementioned method. When the use environment of the filter is changed, the burning state inside the filter including the honeycomb structured body, the distribution of heat to be generated and the like are changed in many cases. In such cases, in a case of a conventional honeycomb structured body, the design of the entire honeycomb structured body needs to be changed, and even if the design has been changed, it sometimes fails to efficiently respond to a change in burning characteristics.
However, in a case of the honeycomb structured body of the present invention, only by changing the design so as to make the apparent density on the gas inlet side and the apparent density on the gas outlet side different from each other, it becomes possible to efficiently respond to the resulting change in burning characteristics. In other words, in the honeycomb structured body of the present invention, it is possible to feed back a change in burning characteristics of PMs as a design change, that is, the change in apparent density.

In the honeycomb structured body of the present invention (that is, the laminated honeycomb structured body), the fraction (d_{b}/dₐ) indicating a ratio of the apparent density (d_{b}) on the gas inlet side to the apparent density (dₐ) on the gas outlet side is preferably set in the range of 1.1 to 6.0.
In a case where a ratio of the apparent density on the gas inlet side to the apparent density on the gas outlet side is less than 1.1, since there is no significant difference between those apparent densities on the gas inlet side and the gas outlet side, it sometimes becomes difficult to obtain the effects of the present invention. Moreover, the temperature on the gas outlet side might rise to cause cracks in the honeycomb structured body. In contrast, in a case where the ratio is more than 6.0, soot tends to be accumulated on the gas inlet side, and when the degree of the accumulation becomes greater, cracks and the like tend to occur in the honeycomb structured body on both of the gas inlet side and the gas outlet side.

With respect to the apparent density of each of the gas inlet side and the gas outlet side, the lower limit is preferably set to 0.04 g/cm³, and the upper limit is preferably set to 0.7 g/cm³ .
The value of less than 0.04 g/cm³ tends to make the strength insufficient to cause the product to be easily damaged. Moreover, the value of 0.7 g/cm³ or less is preferable because this makes it possible to continuously burn PMs.

In the honeycomb structured body of the present invention, the porosity on the gas inlet side is preferably set in the range of 75 to 95%, and the porosity on the gas outlet side is preferably set in the range of 70 to 90%, with the porosity on the gas inlet side preferably made more than the porosity on the gas outlet side.

In a case where the porosity on the gas inlet side is less than 75%, it becomes difficult to raise the temperature inside the filter to a temperature required for burning PMs upon regenerating the filter, and since the PMs are hardly allowed to enter the inside of pores, the continuous regenerating performance of the honeycomb structured body tends to be lowered. In contrast, in a case where the porosity on the gas inlet side is more than 95%, the rate of occupation by pores becomes greater, making it difficult to properly maintain the strength of the entire honeycomb structured body.

With respect to the porosity on the gas outlet side, when it is less than 70%, the continuous regenerating performance of the honeycomb structured body tends to be lowered in the same manner as in the gas inlet side, and, in contrast, when it is more than 90%, the thermal capacity might be lowered to cause an abrupt temperature rise and the subsequent occurrence of cracks and the like.
Moreover, when the porosity on the gas inlet side is made more than the porosity on the gas outlet side, within the respective ranges in the porosity, it becomes possible to suppress an occurrence of a temperature difference in the lamination direction of the honeycomb structured body upon regenerating the fiber, and consequently to prevent damages.

In the laminated honeycomb structured body, piling members, each having a plurality of cells separated by a cell wall from each other, are laminated with the cells superposed on one after another.
Not limited to a round pillar shape as will be described later, the honeycomb structured body may have any desired shape including an oval pillar, a polygonal pillar and the like.
In a case where the honeycomb structured body is placed right under the engine, since the space is extremely limited, the shape of the filter also needs to be formed into a complicated shape so as to fit to the space in most cases. In such cases, the laminated honeycomb structured body is suitable to be processed into a desired structure and a shape so that it is possible to manufacture a honeycomb structured body having a complicated shape.

Moreover, in the honeycomb structured body, the distance between the adjacent cells (that is, the thickness of the cell walls) is preferably set to 0.2 mm or more. The distance of less than 0.2 mm tends to cause a reduction in the strength of the honeycomb structured body.

In contrast, the upper limit of the distance between the adjacent cells (the thickness of the cell walls) is preferably set to 5.0 mm. The thickness of the cell walls that exceeds 5.0 mm tends to make the aperture ratio of the cells and/or the filtration area smaller, resulting in an increase in pressure loss. Moreover, ashes generated upon burning PMs tend to deeply intrude into the pores, and hardly come off. In a case where the range in which PMs can be deep-filtrated is defined as the effective area of the walls for soot collection, the ratio at which the honeycomb structured body is occupied by the effective area is lowered.

Moreover, with respect to the average pore diameter in the honeycomb structured body, not particularly limited, the lower limit is preferably set to 1 µm, and the upper limit is preferably set to 100µm. When it is less than 1 µm, PMs are not filtered through deep layers inside the cell walls, sometimes making it difficult for the PMs to contact the catalyst supported on the inside of the cell wall. In contrast, when it exceeds 100 µm, PMs tend to pass through the pores, with the result that the PMs are not sufficiently collected, causing the filter to fail to sufficiently exert its function.
Here, the porosity and the average pore diameter can be measured by conventionally known methods, such as a measuring process by a mercury porosimeter, a weighting method, Archimedes method and a measuring method using a scanning electron microscope (SEM).

In the honeycomb structured body, with respect to the cell density on a face in parallel with the lamination face of the piling members, not particularly limited, the lower limit is preferably set to 0.16 cells/cm² (1.0 cell/in²) and the upper limit is preferably set to 93 cells/cm² (600 cells/in²), and the lower limit is more preferably set to 0.62 cells/cm² (4.0 cells/in²) and the upper limit is more preferably set to 77.5 cells/cm² (500 cells/in²).

With respect to the size of the cell on a face in parallel with the lamination face of the piling members of the honeycomb structured body, not particularly limited, the lower limit is set to 0.8 mm x 0.8 mm, and its upper limit is set to 16 mm x 16 mm.

With respect to the aperture ratio of the honeycomb structured body of the present invention, the lower limit is 30%, and the upper limit is 60%.
The aperture ratio of less than 30% tends to cause a high pressure loss upon introducing or discharging exhaust gases to or from the honeycomb structured body, and the aperture ratio exceeding 60% tends to cause a reduction in the strength of the honeycomb structured body.

Next, referring to Figures, the following description will discuss the honeycomb structured body of the present invention.

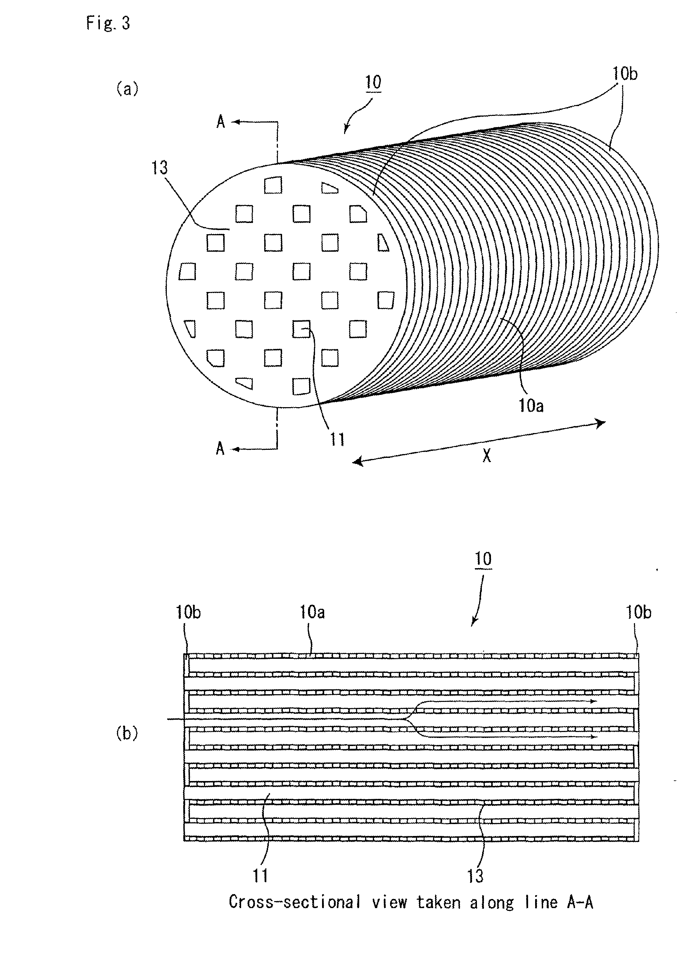

Fig. 3 (a) is a perspective view that schematically shows one example of a honeycomb structured body, and Fig. 3(b) is a cross-sectional view taken along line A-A.

A honeycomb structured body 10 in a round pillar shape has a structure in which piling members, each having a number of cells 11 separated by a wall portion (cell wall) 13 from each other, are laminated so that the cells 11 are superposed on one after another. The respective cells 11, formed in the piling members, are communicated with one after another from the one end to the other end in the longitudinal direction (in a direction indicated by a double arrow X shown in Fig. 3(a)) of the honeycomb structured body 10, and either one of the ends of these communicating cells (hereinafter, also referred to as communication cells) is plugged by a member for an end portion (piling member for an end portion). Here, the member for an end portion (piling member for an end portion) will be described later.
In the present invention, the member for an end portion includes the piling member for an end portion, and both of the member for an end portion and the piling member for an end portion are dealt as similar members.

As shown in Fig. 3(b), with respect to the communication cell 11, either one of the ends corresponding to the exhaust-gas inlet side or outlet side is plugged so that exhaust gases, which have entered one cell 11, are allowed to flow out from another cell 11 after having passed through a cell wall 13 that separates the cells 11. In other words, the cell wall 13 is allowed to function as a filter.

Moreover, the honeycomb structured body 10 is a laminated body in which piling members 10a each having a thickness of 0.1 to 20 mm are laminated, and the piling members 10a are laminated so that the cells 11 are superposed on one after another.
Here, the description that the piling members are laminated in a manner so as to superpose the cells on one after another means that the piling members are laminated in such a manner that, when one cell formed in a piling member and another cell formed in the adjacent piling member are projected perpendicularly to the piling members, the respective cells have at least partly overlapped areas.
Moreover, although it depends on the material and the like of the piling members, piling members, each having a thickness exceeding 20 mm, may be laminated on demand to manufacture a honeycomb structured body.

In this manner, the honeycomb structured body may be constituted by piling members, or may be constituted by a single honeycomb member. In a case where the honeycomb structured body is formed by a single honeycomb member, preferably, the honeycomb member mainly comprises inorganic fibers and/or metal. With respect to such a honeycomb member, not particularly limited, for example, a member in which the thickness of the piling member is expanded may be used.

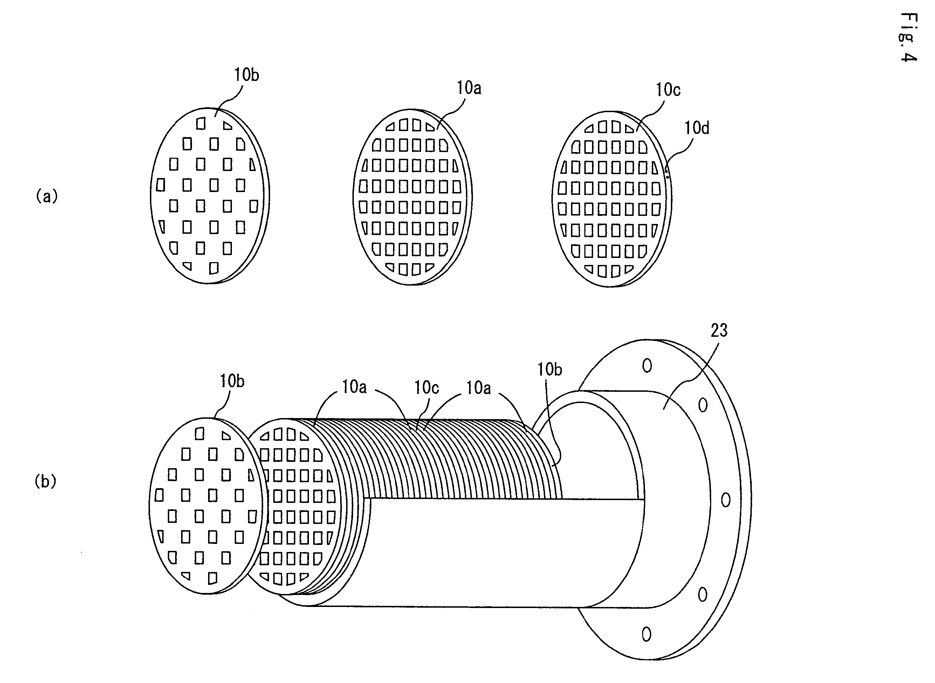

A piling member 10b for an end portion, which has cells formed into a checkered pattern, is laminated on each of the ends of the honeycomb structured body constituted by laminated piling members 10a (see Figs. 4(a) and 4(b)).
Moreover, in the honeycomb structured body of the present invention, a partition plate 10c may be placed between the piling members 10a so as to maintain a laminated structure in which apparent densities on the gas inlet side and on the gas outlet side are made different from each other (see Figs. 4 (a) and 4(b)).

The honeycomb structured body of the present invention is preferably formed by laminating piling members mainly comprising inorganic fibers (hereinafter, also referred to as inorganic fiber piling members) and/or piling members mainly comprising metal (hereinafter, also referred to as metal piling members). By using these piling members, it becomes possible to manufacture a honeycomb structured body that is superior in strength, even when a high heat-resisting property and high porosity are prepared therein.
Upon laminating the respective piling members, only the inorganic fiber piling members may be laminated, or only the metal fiber piling members may be laminated. Moreover, the inorganic fiber piling members and the metal piling members may be laminated in combination. In a case where the two kinds of the piling members are laminated in combination, the order of the piling processes thereof is not particularly limited.

With respect to the materials for the inorganic fibers that form the above-mentioned inorganic fiber piling member, examples thereof include oxide ceramic materials, such as silica-alumina, mullite, alumina, silica, titania and zirconia, nitride ceramic materials, such as silicon nitride and boron nitride, and carbide ceramic materials such as silicon carbide, and basalt. Each of these may be used alone or two or more kinds of these may be used in combination.

With respect to the fiber length of the inorganic fibers, a preferable lower limit is set to 0.1 mm and a preferable upper limit is set to 100 mm, more preferably, the lower limit is set to 0.5 mm and the upper limit is set to 50 mm. A preferable lower limit of the inorganic fiber length is set to 0.3 µm, and a preferable upper limit thereof is set to 30 µm, more preferably, the lower limit is set to 0.5 µm and the upper limit is set to 15 µm.

In addition to the above-mentioned inorganic fibers, the inorganic fiber piling member may contain a binder used for combining these inorganic fibers mutually so as to maintain a predetermined shape.
With respect to the above-mentioned binder, not particularly limited, inorganic glass, such as silicate glass, silicate alkali glass and borosilicate glass, alumina sol, silica sol, titania sol and the like may be used. The above-mentioned inorganic fiber piling member may contain a small amount of inorganic particles and metal particles.

With respect to the above-mentioned inorganic fiber piling member, the inorganic fibers may be mutually fixed with one another by an inorganic substance containing silica, or the like. In this case, preferably, the inorganic fibers are mutually fixed to one another, not over a certain degree of length along the longitudinal direction of the inorganic fibers, but at the intersections or in the vicinity of the intersections on the surfaces of the inorganic fibers. Thus, it becomes possible to obtain an inorganic fiber piling member that is superior in strength and flexibility.
With respect to the inorganic substance containing silica, inorganic glass, such as silicate glass, silicate alkali glass and borosilicate glass, may be used.

With respect to the material for the metal piling member, not particularly limited, examples thereof include chromium-based stainless steel, chromium-nickel-based stainless steel, and the like.
Moreover, the above-mentioned metal piling member is preferably prepared as a structured body constituted by metal fibers, made from the above-mentioned metal, that are entangled three-dimensionally, or a structured body made from the above-mentioned metal, with penetrating pores formed by a pore-forming material, or a structured body made by firing metal powder made from the above-mentioned metal so as to allow pores to be left therein, or the like.

Preferably, a piling member for an end portion having cells formed into a checkered pattern is further laminated on each of two ends of the inorganic fiber piling members or the metal piling members, thus laminated.
By laminating the piling member for an end portion, without the necessity of plugging the cells of the piling member that has been positioned at the end portion prior to the lamination of the piling member for an end portion by using plugs or the like, it is possible to plug either one of the ends of each of communicating cells formed by laminating the piling members. Moreover, with respect to a honeycomb structured body other than the laminated honeycomb structured body, by placing a member for an end portion, it becomes possible to obtain the same effects as those obtained by laminating the above-mentioned piling member for an end portion.

The piling member for an end portion is preferably formed by the same material as the above-mentioned inorganic fiber piling member and metal piling member, or by a dense material, with the cells formed into a checkered pattern.
In the present specification, the dense material refers to a material that has a porosity smaller than that of the material forming the piling member, and specific examples thereof include metal, ceramic materials, and the like.
In a case where the dense material is used, the piling member for an end portion can be made thinner.
With respect to the piling member for an end portion, a material made of solid (dense) metal is preferably used.

With respect to the combination between the piling member and the piling member for an end portion, the following combinations may be used: (1) a combination in which an inorganic fiber piling member is used as the piling member, and an inorganic fiber piling member with cells formed into a checkered pattern, or a metal piling member or a piling member made from a dense material is used as the piling member for an end portion; (2) a combination in which a metal piling member is used as the piling member, and an inorganic fiber piling member with cells formed into a checkered pattern, a metal piling member or a piling member made from a dense material is used as the piling member for an end portion; and (3) a combination in which an inorganic fiber piling member and a metal piling member are used as the piling member in combination, and an inorganic fiber piling member with cells formed into a checkered pattern, a metal piling member, or a piling member made from a solid (dense) material is used as the piling member for an end portion.

Among the above-mentioned combinations, the combination in which an inorganic fiber piling member and/or a metal piling member are used as the piling members, and a metal piling member with cells formed into a checkered pattern or a piling member made from a solid (dense) material is used as the piling member for an end portion is preferably used.
In a case where the piling member for an end portion, made from a dense material is used as the piling member for an end portion, this arrangement is preferably used since it becomes possible to prevent soot from leaking through the plugged portion.
Moreover, in a case where only the metal piling member is used as the piling member, and in a case where a metal piling member with cells formed into a checkered pattern or a piling member for an end portion, made of a solid (dense) metal, is laminated on each of two ends of the laminated inorganic fiber piling members or metal piling members, the resulting structured body is less likely to be wind-eroded or eroded even after use for a long time. Here, the thermal conductivity of each of the piling members is preferably made virtually identical.

By using the above-mentioned combination, it becomes possible to prevent a gap from being generated between the metal casing and the honeycomb structured body as well as between the respective piling members, due to a difference in thermal expansion coefficients. Consequently, it becomes possible to prevent PMs in exhaust gases from leaking, and subsequently to prevent a reduction in the capturing efficiency of PMs.

The true density of the piling members constituting a honeycomb structured body of the present invention may be different between the respective piling members; however, the true density of all the piling members is preferably made virtually identical. This is because by using the piling members having virtually the same true density, the difference in porosity or the like can be reflected to the difference in the apparent density so that a honeycomb structured body which has different apparent densities between the gas inlet side and the gas outlet side can be manufactured.

Moreover, by laminating piling members having different cell dimensions as the piling members constituting the honeycomb structured body, irregularities are formed on an inner surface of each communicating cell so that the filtration area becomes greater to further reduce the pressure loss upon capturing PMs. Furthermore, since the flow of exhaust gases is formed into a turbulent flow by the irregularities, the temperature difference inside the filter can be made smaller to effectively prevent damages due to thermal stress.

With respect to the shape of the cells in a plan view, not particularly limited to a square shape, any desired shape, for example, a triangular shape, a pentagonal shape, an octagonal shape, a dodecagonal shape, a circular shape, an oval shape, a star shape or the like, may be used.

Moreover, a partition plate may be laminated between the laminated inorganic fiber piling members and metal piling members so as to maintain a predetermined laminated structure.
A number of cells separated by cell walls are formed in the partition plate, and since the formation positions of these cells are the same as those of the inorganic fiber piling members and the metal piling members, the flow of exhaust gases through a communicating cell formed by laminating the piling members is not disturbed.

Moreover, fixing members used for fixing the partition plate to a metal casing are attached to the peripheral edge portions of the partition plate. Upon placing a honeycomb structured body into a metal casing to form an exhaust gas purifying device, the fixing members are secured to predetermined positions of the metal casing so that the laminated structure of the piling members forming the honeycomb structured body is maintained. With respect to the mechanism of the fixing members, not particularly limited, for example, hook fastening, screw fastening, latch fastening, welding, soldering, and a combination of these may be used.

With respect to the material for the partition plate, not particularly limited, the same material as the material for the piling member for an end portion may be used, and in particular, the aforementioned dense material is preferably used.
For example, in a case where upon forming a honeycomb structured body of the present invention, piling members are laminated in a manner so as to make difference in a laminated degree between two areas (for example, the piling members are compressed in one area, while the piling members are not compressed in the other area), if a partition plate is laminated so as to maintain the laminated degrees of the respective areas, a pressure is applied to the partition plate from the area having the compressed piling members. When this partition plate is secured to a metal casing, a stress is exerted thereon from the fixing members by the pressure; however, by forming the partition plate using a dense material, it becomes possible to prevent deformation and damage to the partition plate caused by the stress.
The number of partition plates to be laminated is not particularly limited, and the partition plates may be laminated depending on the number of areas that have different laminated degrees.

A catalyst is preferably supported on the piling members constituting the honeycomb structured body.
The catalyst may be supported on all the piling members, or may be supported on one portion of the piling members. With respect to a single piling member, it is only necessary for the catalyst to be supported on the entire surface of the piling member or on one portion thereof.

With respect to the catalyst, examples thereof include: noble metals, such as platinum, palladium and rhodium, alkali metal, alkali-earth metal and oxides thereof, or a combination of these.
With respect to the oxides, examples thereof include: metal oxides, such as CeO₂, ZrO₂, FeO₂, Fe₂O₃, CuO, CuO₂, Mn₂O₃ and MnO, and composite oxides or the like, indicated by the composition formula AnB₁₋ₙCO₃ (in the formula, A is La, Nd, Sm, Eu, Gd or Y, B is an alkali metal or alkali-earth metal, and C is Mn, Co, Fe or Ni). When the above-mentioned oxide is supported on the piling member, the burning temperature of PMs can be lowered.
Each of these catalysts may be used alone, or two or more of these may be used in combination.

The amount of support of the catalyst with respect to the apparent volume of the honeycomb structured body is preferably set in the range of 10 to 50 g/l.
With respect to the amount of support of less than 10 g/l, there occur more portions of the honeycomb structured body in which the catalyst is not supported, and since the probability of contact between PMs and the catalyst is lowered, it sometimes becomes difficult to sufficiently lower the burning temperature of PMs. In contrast, with respect to the amount of support exceeding 50 g/l, there occurs an excessive amount of catalyst, with the result that in many cases, the contact probability of PMs and the catalyst is not improved so much.

Moreover, the heat resistant temperature of the honeycomb structured body is preferably set to 1200°C or more.
In a case of the heat resistant temperature of less than 1200°C, upon carrying out a regenerating process by burning a large amount of PMs (for example, 5 g/l or more), damages such as melting loss (molten erosion) tend to occur in the honeycomb structured body. Therefore, in a case of a low heat resistant temperature of the honeycomb structured body, it is necessary to frequently carry out the regenerating process so as to avoid melting loss (molten erosion), and such frequent regenerating processes tends to cause a problem with fuel costs.

In particular, in a case where an oxide catalyst is supported on the honeycomb structured body, since the temperature of the honeycomb structured body tends to easily rise, the heat resistant temperature is preferably set in the above-mentioned range.
Here, in order to avoid the problem with the fuel costs in an internal combustion engine, the regenerating process of the honeycomb structured body is preferably carried out with PMs deposited within the range of 2 to 3 g/l.

The respective piling members may be bonded to one after another by using an inorganic bonding material or the like, or may be simply laminated mechanically; however, it is more preferable to simply laminate them mechanically. The simply mechanically laminated structure makes it possible to prevent a joining portion (or a bonding portion) coated with a bonding material or the like from intervening with the flow of exhaust gases and causing an increase in pressure loss. Here, in order to simply laminate the piling members mechanically to form a laminated body, the piling members can be laminated in a metal casing, which will be described later, with a pressure applied thereto.

Since the honeycomb structured body of the present invention has a structure in which piling members are laminated, and since the apparent density on the gas inlet side and the apparent density on the gas outlet side are different from each other, even when a great temperature difference occurs in the entire filter upon carrying out a regenerating process or the like, the temperature difference occurring in each of the piling members is small, and the subsequent thermal stress is small, making it possible to reduce the occurrence of damages.

Since the laminated structure of this kind is prepared, the honeycomb structured body of the present invention makes it possible to provide a high porosity so as to allow deep-filtration through the cell walls. Moreover, in the honeycomb structured body, since it is possible to easily allow PMs to reach the deep layers as described above, the catalyst supported on the inside of each cell wall is easily made in contact with PMs, making it possible to burn more PMs efficiently.
Moreover, in a case of a filter having a complicated shape, the filter becomes fragile against thermal stress; however, the honeycomb structured body of the present invention is hardly damaged, even when formed into a complicated shape.

Normally, the above-mentioned honeycomb structured body is installed in a cylindrical metal casing.
With respect to the material for the metal casing, for example, metals, such as stainless steel and iron, are used.
With respect to the shape of the metal casing, it may be prepared as an integral cylindrical body or as a cylindrical body that can be divided into two or more division parts (for example, a metal casing of a clam-shell type or the like).

Referring to Figs. 4(a) and 4(b), the following description will discuss a method for manufacturing a honeycomb structured body in accordance with the second aspect of the present invention.
The method for manufacturing a honeycomb structured body of the second aspect of the present invention comprises preparing a plurality of piling members, each having a plurality of cells separated from each other by a cell wall; and laminating the piling members so that the corresponding cells of respective piling members are superposed on one another, and in this method, before the lamination and/or after the lamination of the piling members, by compressing at least one portion of the piling members, the honeycomb structured body according to the first aspect of the present invention is manufactured.
In other words, the second aspect of the present invention is provided with the process of compressing at least one portion of the piling members, before the piling members have been laminated and/or after the piling members have been laminated.
The following description will discuss the sequence of processes.

### (1) Method for manufacturing inorganic fiber piling members and piling members for an end portion made from inorganic fibers

First, a sheet-forming slurry is prepared. More specifically, for example, inorganic materials, such as inorganic fibers and inorganic glass or the like, are sufficiently mixed, and to this is further added appropriate amounts of water, an organic binder, an inorganic binder, etc., if necessary, and this is sufficiently stirred to prepare the sheet-forming slurry.

Next, by using the sheet-forming slurry, piling members mainly comprising inorganic fibers are formed.
More specifically, first, the above-mentioned sheet-forming slurry is sheet-formed by using a mesh, and the resulting matter is dried at a temperature in the range of 100 to 200°C, and a punching process is further carried out to prepare cells with equal intervals over the entire face; thereafter, a heating treatment is carried out thereon at a temperature of 900 to 1050°C so that, as shown in Fig. 4(a), an inorganic fiber piling member 10a having a predetermined thickness, with cells formed thereon with a high density, is obtained.

Moreover, upon manufacturing a piling member for an end portion by using inorganic fibers, the above-mentioned sheet-forming slurry is sheet-formed by using a mesh, and the resulting matter is dried at a temperature in the range of 100 to 200°C, and a punching process is further carried out to prepare cells having a checkered pattern. Thereafter, a heating treatment is carried out thereon at a temperature of 900 to 1050°C so that an inorganic fiber piling member 10b for an end portion with predetermined cells formed at a low density, is manufactured.

With respect to the method for adjusting the porosity of the inorganic fiber piling members, for example, a method in which the thickness of the resulting sheet-formed product is adjusted by the number of the sheet-forming operations in the sheet-forming process of the inorganic fibers and a method in which in the heat treatment process, the heating treatment is carried out on the sheet-formed inorganic fiber piling members while being compressed are listed.

By using these methods, inorganic fiber piling members 10a and piling members 10b for an end portion in which inorganic fibers are mutually adhered through an inorganic substance such as inorganic glass can be manufactured.
An acid treatment or a quenching treatment may be further carried out on the heated inorganic fiber piling members and the heated piling members for an end portion.

If necessary, after the manufacturing process, a catalyst is supported on the inorganic fiber piling members and piling members for an end portion.
Upon supporting a catalyst, the catalyst may be preliminarily supported on the inorganic fibers such as alumina fibers forming a constituent material. When the catalyst is supported on the inorganic fibers prior to the molding process, the catalyst can be adhered in a more evenly dispersed state.

With respect to the method for supporting a catalyst on the inorganic fibers serving as a constituent material or the inorganic fiber piling members, for example, a method in which, after inorganic fibers or inorganic fiber piling members have been immersed in a slurry containing a catalyst, these are taken out and dried is used. By repeating the immersing process into slurry and the heating and drying processes, the amount of supported catalyst on the inorganic fibers or the inorganic fiber piling members can be adjusted. The catalyst may be supported on the entire portion of the inorganic fibers or the inorganic fiber piling members, or may be supported on one portion thereof. Moreover, the catalyst may be supported on only one portion of the inorganic fiber piling members, or may be supported on all the inorganic fiber piling members.
Here, the catalyst may be supported after the sheet-forming treatment.

### (2) Method for manufacturing metal piling members and piling members for an end portion made from metal

First, a laser beam machining process or a punching process is carried out on a porous metal plate mainly made of metal having a thickness in the range of 0.1 to 20 mm so that cells are formed on the entire surface with virtually equal mutual intervals so that as shown in Fig. 4 (a), a piling member 10a with cells formed thereon at a high density is manufactured.
Moreover, upon manufacturing a piling member for an end portion that is placed in the vicinity of the end face of a honeycomb structured body and constitutes a cell plugging portion, the cells are formed into a checkered pattern upon conducting the laser beam machining process so that a piling member 10b for an end portion with cells formed thereon at a low density is manufactured.
By using one to several of the piling members for an end portion with the cells formed at a low density as the end portion, it is possible to provide a honeycomb structured body functioning as a filter without the necessity of a process for plugging the predetermined cells of the end portion.
Not limited to a member formed by inorganic fibers and porous metal, such as the piling member 10a, the piling member 10b for an end portion may be prepared as a plate-shaped member made from a dense material such as a ceramic material and metal.

Next, a catalyst is supported on the metal piling member, if necessary.
With respect to the method for supporting an oxide catalyst, for example, a method in which the metal piling member is immersed into a solution containing 10 g of CZ (nCeO₂·mZrO₂), 1 1 (liter) of ethanol, 5 g of citric acid and an appropriate amount of a pH adjusting agent for about 5 minutes, and then a firing process is carried out at 500°C may be used.
In this case, by repeating the above-mentioned immersing and firing processes, the amount of supported catalyst can be adjusted.
Here, the above-mentioned catalyst may be supported only on one portion of the metal piling members, or may be supporting on all the metal piling members.

### (3) Method for manufacturing of a partition plate

First, a laser beam machining process or a punching process is carried out on a solid (dense) metal plate mainly made of metal having a thickness in the range of 0.1 to 20 mm so that cells are formed thereon with virtually equal mutual intervals so that as shown in Fig. 4(a), a partition plate 10c with cells formed thereon at a high density is manufactured.
When the partition plate having cells formed at a high density is used, it becomes possible to easily maintain a desired laminated structure in a honeycomb structured body obtained, in particular, through a process in which the piling members are compressed.

A catalyst may be supported on the partition plate, if necessary, in the same manner as in the case of the metal piling members. Here, the above-mentioned catalyst may be supported only on one portion of the metal piling members or on all the metal piling members.

### (4) Process for compressing at least one portion of piling members before the lamination process and/or after the lamination process

The method for manufacturing a honeycomb structured body of the second aspect of the present invention, which is a method for manufacturing a honeycomb structured body in which a plurality of piling members, each having a plurality of cells separated by cell walls, are prepared, and the piling members are laminated so that the corresponding cells of respective piling members are superposed on one another, is further provided with a process in which, before the piling members have been laminated and/or after the piling members have been laminated, at least one portion of the piling members are compressed.
As shown in Fig. 4 (b), by using a cylindrical metal casing 23 having a pressing member attached to an end portion on the gas inlet side, the piling members 10b for an end portion, the piling members 10a and the partition plates 10c, prepared through the processes (1) to (3), are laminated inside the metal casing 23. Here, the piling member 10a may be an inorganic fiber piling member or a metal piling member, or may be a combined member of these.

First, one to several of the piling members 10b for an end portion are laminated on the end portion of the gas inlet side so as to be made in contact with the pressing member, a plurality of the piling members 10a are laminated thereon, and the partition plate 10c is further laminated thereon. After those members up to the partition plate 10c have been laminated, the aggregated body of the piling members is compressed so as to have a predetermined apparent density, and while the compressed state is being maintained, the partition plate 10c is secured to the metal casing 23 by using fixing members 10d attached to the partition plate 10c.

Next, a predetermined number of the piling members are laminated on the secured partition plate 10c, and one to several of the piling members 10b for an end portion are laminated thereon, and compressed, if necessary, so that by securing these by using pressing members at the end portion on the gas outlet side; thus, a honeycomb structured body in which predetermined laminated structures are maintained on the gas inlet side and on the gas outlet side is manufactured. In other words, by adjusting the degree of compression of the piling members so as to have different apparent densities between the gas inlet side and the gas outlet side, the laminated honeycomb structured body of the present invention can be manufactured.

In an attempt to provide three or more of the areas having different apparent densities, in the above-mentioned lamination process, the processes, which are used for securing the partition plate onto the metal casing, for laminating a predetermined number of the piling members and compressing the members, and for securing these by using another partition plate, with the compressed state maintained, can be repeated.
In the present lamination process, the respective piling members are laminated so as to make the corresponding cells superposed on one another. Moreover, in a case where a solid (dense) plate member made of metal is used as the piling member for an end portion, the plate member may be welded so as to be used as the pressing metal member.

With respect to the order of compressing processes used for adjusting the apparent densities on the gas inlet side as well as on the gas outlet side, as described above, the aggregate body of the piling members may be compressed so as to have a predetermined apparent density after having laminated the piling members, or the order of processes in which piling members that have been preliminarily compressed to a predetermined apparent density are laminated may be used. Compressing processes may be prepared on both of the stages before and after the lamination of the piling members.

As described above, in the method for manufacturing a honeycomb structured body relating to the second aspect of the present invention, by preparing a process for compressing at least one portion of the piling members before the piling members have been laminated and/or after the piling members have been laminated, it becomes possible to efficiently manufacture a honeycomb structured body having different apparent densities between the gas inlet side and the gas outlet side.

The following description will discuss a method for manufacturing a honeycomb structured body in accordance with the third aspect of the present invention.
The method for manufacturing a honeycomb structured body of the third aspect of the present invention comprises preparing a plurality of piling members, each having a plurality of cells separated from each other by a cell wall; and laminating the piling members so that the corresponding cells of respective piling members are superposed on one another, and in this method, upon laminating the piling members, by laminating the piling members having a different porosity as at least one portion of the piling members, the honeycomb structured body according to the first aspect of the present invention is manufactured.
In other words, the third aspect of the present invention includes the process of, upon laminating the piling members, laminating those piling members having a different porosity on at least one portion thereof.

In other words, instead of adjusting the apparent density by changing the degree of compression of the piling members in the method for manufacturing a honeycomb structured body in accordance with the second aspect of the present invention, the third aspect of the present invention has an arrangement in which, upon laminating the piling members, the apparent density of the honeycomb structured body is adjusted by laminating piling members having a different porosity on at least one portion thereof.
Here, since the respective sequences of processes have been described in the method for manufacturing a honeycomb structured body of the second aspect of the present invention, the description thereof is omitted.

More specifically, the required number of piling members are laminated on the end portion on the gas inlet side, and a predetermined number of piling members having a predetermined porosity are laminated thereon. Next, a predetermined number of piling members having a porosity different from that of the piling members laminated on the end portion on the gas inlet side are laminated, and the piling member for an end portion is laminated on the end portion on the gas outlet side. Here, the partition plate may be placed between the piling members at which the porosities change, or may not be placed. However, since the piling members could cause a change in the porosity, the compression thereof is preferably carried out within a minimum level required.

With respect to the method for manufacturing the piling members having different porosities, referring to the description given in the method for manufacturing the honeycomb structured body in accordance with the second aspect of the present invention, the following method is briefly given: For example, in a case of inorganic fiber piling members, the porosity can be adjusted by adjusting the processed fiber thickness upon sheet-forming the inorganic fibers as well as by compression-heating process of the sheet-formed product; in contrast, in a case of metal piling members, the porosity can be adjusted by using metal plates having different porosities as porous metal plates to be used in the punching operation.

In the same manner as in the method for manufacturing the honeycomb structured body in accordance with the second aspect of the present invention, in an attempt to provide three or more of the areas having different porosities, piling members having different porosities can be successively laminated.

In this manner, in the method for manufacturing a honeycomb structured body in accordance with the third aspect of the present invention, by going through a process in which, upon laminating piling members, those piling members having a different porosity are laminated at least on one portion thereof, it becomes possible to easily manufacture the honeycomb structured body of the present invention.

The following description will discuss a method for manufacturing a honeycomb structured body in accordance with the fourth aspect of the present invention.
The method for manufacturing a honeycomb structured body of the fourth aspect of the present invention comprises preparing a plurality of piling members, each having a plurality of cells separated from each other by a cell wall; and laminating the piling members so that the corresponding cells of respective piling members are superposed on one another, and in this method, upon laminating the piling members, by laminating the piling members having a different thickness in the cell on at least one portion of the piling members, a honeycomb structured body according to the first aspect of the present invention is manufactured.
In other words, the fourth aspect of the present invention includes the process of, upon laminating the piling members, laminating those piling members having a different thickness in the cell walls on at least one portion thereof.

In the present manufacturing method, instead of adjusting the apparent density by changing the degree of compression of the piling members in the method for manufacturing a honeycomb structured body in accordance with the second aspect of the present invention, the apparent density of the honeycomb structured body is adjusted by laminating those piling members having a different thickness in the cell walls. When the thickness of the cell walls is made thicker, the volume occupied by the opening parts (that is, cells) of the piling members is reduced, with the result that the apparent density subsequently increases. In contrast, when the thickness of the cell walls is made thinner, the apparent density decreases.

In order to change the thickness of the cell walls, it is only necessary to change the size of the cells to be formed through the punching operation in the manufacturing process of the piling members. Consequently, when the size of the cells is made smaller, the apparent density increases; in contrast, when the size of the cells is made greater, the apparent density decreases.

The resulting piling members having different thicknesses in the cell walls thus manufactured are laminated so as to prepare a desired apparent density so that the honeycomb structured body of the present invention is manufactured.
By laminating a plurality of kinds of the piling members that have different thicknesses in the cell walls in multiple stages, the inner surface of each communicating cell formed by the laminated piling members is allowed to have irregular shapes or a step-like shape so that the inner surface area of the communicating cell can be increased. As a result, since the filtration area for exhaust gases becomes larger, it becomes possible to efficiently carry out the exhaust-gas purifying operation. In this case, the piling members are laminated in a manner so as to make the average thickness of the cell walls different at a predetermined area.
Here, the compression of the piling members may be carried out on demand. Moreover, in most cases, the partition plate is not laminated so as to prevent a reduction in the effective filtration area.

With respect to the methods for manufacturing a honeycomb structured body in accordance with the second to fourth aspects of the present invention, each of the manufacturing methods may be carried out independently, or two or more of them may be carried out in combination. In a case of carrying out the manufacturing methods in combination, not particularly limited, for example, the method for manufacturing a honeycomb structured body of the second aspect of the present invention and the method for manufacturing a honeycomb structured body of the third aspect of the present invention may be carried out in combination, and the following processes can be briefly exemplified.
A piling member for an end portion is placed on a metal casing, and a predetermined number of piling members are laminated thereon, and then these are compressed, and a partition plate is laminated and secured thereon (the method for manufacturing a honeycomb structured body of the second aspect of the present invention) . Next, a predetermined number of piling members having a different porosity are laminated on the secured partition plate, and a piling member for an end portion is then laminated thereon (the method for manufacturing a honeycomb structured body of the third aspect of the present invention).
The order of these processes is not limited to the exemplified order, and after the method for manufacturing a honeycomb structured body of the third aspect of the present invention has been carried out, the method for manufacturing a honeycomb structured body of the second aspect of the present invention may be carried out.

The following description will discuss a method for manufacturing a honeycomb structured body in accordance with the fifth aspect of the present invention.
The method for manufacturing a honeycomb structured body of the fifth aspect of the present invention comprises preparing a pillar-shaped honeycomb member in which a plurality of cells, separated from each other by a cell wall, are formed in the longitudinal direction; and compressing at least one portion of the pillar-shaped honeycomb member so that the honeycomb structured body in accordance with the first aspect of the present invention is manufactured.
In accordance with the method for manufacturing a honeycomb structured body of the fifth aspect of the present invention, a honeycomb structured body having a desired apparent density can be manufactured simply by compressing at least one portion of the honeycomb members.

The above description has been given on the laminated honeycomb structured body or the like as the honeycomb structured body of the present invention; however, not limited to this, the present invention may be applied to the aggregated honeycomb structured body or the integral honeycomb structured body, with the same effects.

The aggregated honeycomb structured body refers to a honeycomb structured body in which a plurality of pillar-shaped honeycomb units, each having a structure in which a plurality of cells separated by cell walls are formed in the longitudinal direction, are bonded to one another, as described above, and the integral honeycomb structured body refers to a honeycomb structured body formed by a single honeycomb unit.

First, the following description will discuss the aggregated honeycomb structured body.

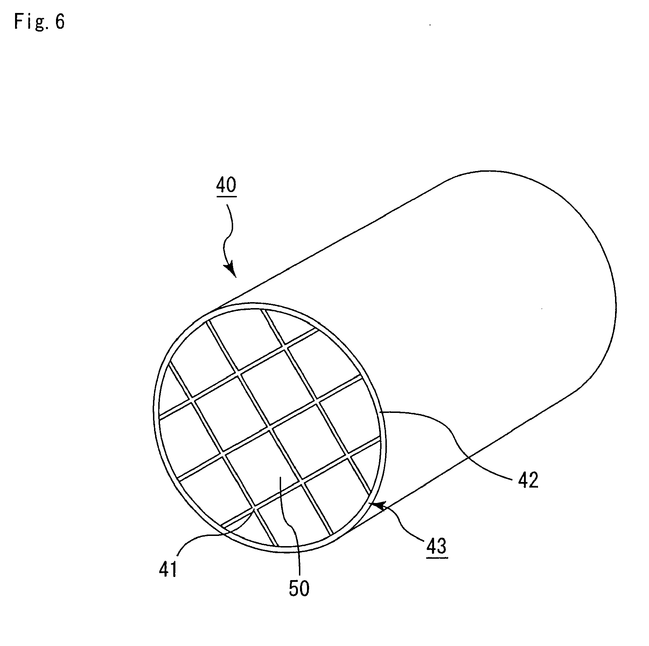

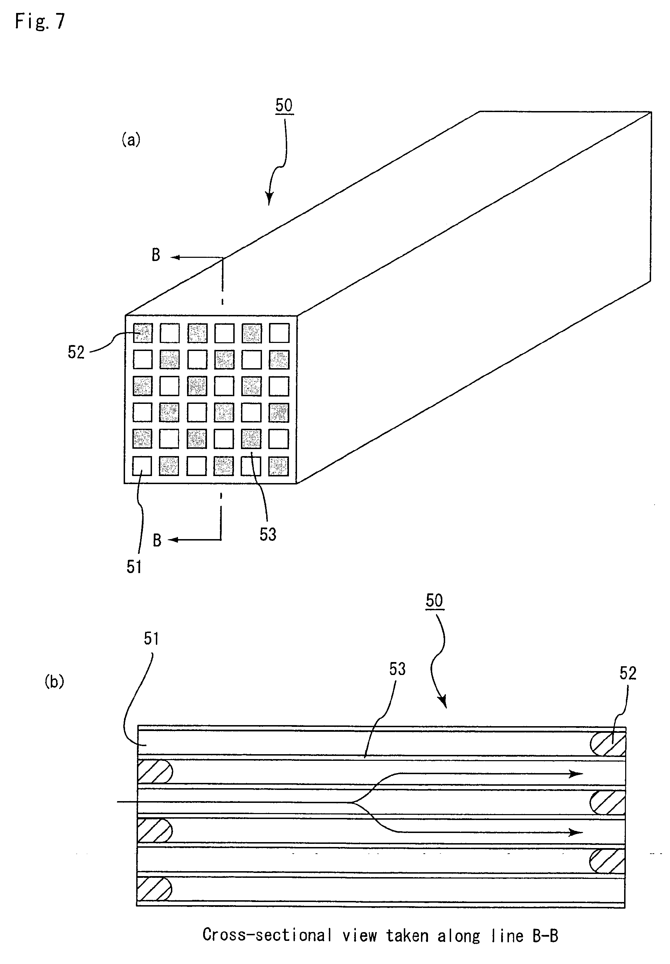

Fig. 6 is a perspective view that schematically shows one example of an aggregated honeycomb structured body, Fig. 7 (a) is a perspective view showing a honeycomb unit forming the honeycomb structured body shown in Fig. 6, and Fig. 7(b) is a cross-sectional view taken along line B-B of the honeycomb unit shown in Fig. 7(a).

As shown in Fig. 6, a honeycomb structured body 40 has a structure in which a plurality of honeycomb units 50, made from a silicon carbide ceramic material and the like, are combined through sealing material layers (bonding material layers) 41 to form a ceramic block 43 in a round pillar shape, with a sealing material layer (coat layer) 42 formed on the periphery of the ceramic block 43.

In the honeycomb structured body 40 shown in Fig. 6, the shape of the ceramic block is a round pillar shape; however, in the honeycomb structured body of the present invention, not limited to the round pillar shape, the ceramic block may have any desired shape, such as an oval pillar shape and a rectangular pillar shape, as long as it is a pillar shape.

As shown in Figs. 7(a) and 7(b), the honeycomb unit 50 has a plurality of cells 51 placed side by side in the longitudinal direction with a cell wall 53 interposed in between, either one of the end portions of the cell 51 is sealed by a plug 52, and each cell wall 53 separating the cells 51 is allowed to function as a filter. In other words, as shown in Fig. 7 (b), each of the cells 51 formed in the honeycomb unit 50 is sealed by the plug 52 at either of the end portions on the inlet side or the outlet side of exhaust gases, so that exhaust gases that have entered one cell 51 are discharged from another cell 51 after having always passed through each cell wall 53 that separates the cells 51.

This aggregated honeycomb structured body 40 is designed in such a manner that, when the honeycomb structured body 40 is divided into two portions on the gas inlet side and the gas outlet side, by a plane in parallel with either one of end faces of the honeycomb structured body in the longitudinal direction so that apparent volumes of the respective divided portions become equal to each other, the divided portions on the gas inlet side and the gas outlet side are allowed to have apparent densities that are different from each other.

With this arrangement, even when a forced regenerating process is carried out within a fixed time so as to dispose of PMs deposited on the inside of the filter (honeycomb structured body), the generation of a temperature difference in the longitudinal direction (direction from the gas inlet side to the gas outlet side) can be restrained by making the quantity of generated heat smaller, thereby making it possible to prevent the generation of damages such as melting loss (molten erosion) and cracks in the honeycomb structured body.

With respect to the method for providing a honeycomb structured body having the above-mentioned structure, as described above, for example, a method in which the weight and the shape of the plugs are changed between the gas inlet side and the gas outlet side, a method in which the porosity is changed between them, and a method in which the thickness of the cell walls is changed between them may be used, and the like.

The aggregated honeycomb structured body 40 mainly comprises a porous ceramic including a honeycomb unit, and examples of its material include: nitride ceramic materials, such as aluminum nitride, silicon nitride, boron nitride and titanium nitride, carbide ceramic materials, such as silicon carbide, zirconium carbide, titanium carbide, tantalum carbide and tungsten carbide, and oxide ceramic materials, such as alumina, zirconia, cordierite, mullite, silica, aluminum titanate, and the like. Moreover, the honeycomb unit may be formed by a composite material between silicon and silicon carbide. In a case of using the composite material between silicon and silicon carbide, silicon is preferably added so as to be set to 0 to 45% by weight to the entire material.
In particular, when the aggregated honeycomb structured body is used as a filter, a silicon carbide ceramic material, which has a high heat resistant property, is superior in mechanical properties, and also has a high thermal conductivity, is preferably used as the material for the honeycomb unit. Here, the silicon carbide ceramic is defined as a ceramic that contains 60% by weight or more silicon carbide.

The thickness of the cell wall 53 is preferably set to 0.1 mm in its lower limit, and to 0.4 mm in its upper limit.
The thickness of the cell wall 53 of less than 0.1 mm makes the strength of the cell wall 53 too low, and consequently causes damages such as cracks; in contrast, the thickness of the cell wall 53 exceeding 0.4 mm tends to cause a failure in maintaining a high aperture ratio and the subsequent high pressure loss.

The porosity of the aggregated honeycomb structured body 40 is preferably set in the range of 45 to 55%.
The porosity of less than 45% tends to cause a high pressure loss; in contrast, the porosity exceeding 55% tends to cause a reduction in the strength.
Here, the above-mentioned porosity can be measured through conventionally known methods, such as a mercury injection method, Archimedes method and a measuring method using a scanning electron microscope (SEM).

With respect to the average pore diameter of the integral honeycomb structured body 40, although not particularly limited, the lower limit thereof is preferably set to 1 µm, and the upper limit thereof is preferably set to 50 µm. More preferably, the lower limit thereof is set to 5 µm, and the upper limit thereof is set to 30 µm. The average pore diameter of less than 1 µm tends to cause a high pressure loss; in contrast, the average pore diameter exceeding 50 µm tends to cause PMs to easily pass through the pores, with the result that the PMs cannot be collected sufficiently, causing a reduction in the collecting efficiency of PMs.

The plug 52 used for sealing the end portion of the aggregated honeycomb structured body 40 and the cell wall 53 are preferably made from the same porous ceramic material. Thus, the contact strength of the two members can be increased, and by adjusting the porosity of the plug 52 in the same manner as in the cell wall 53, the thermal expansion coefficient of the cell wall 53 and the thermal expansion coefficient of the plug 52 are properly coordinated with each other so that it becomes possible to prevent a gap from occurring between the plug 52 and the cell wall 53 due to a thermal stress upon manufacturing as well as in use, and also to prevent cracks from occurring in the plug 52 as well as in the cell wall 53 at portions in contact with the plug 52.

With respect to the length of the plug 52, although not particularly limited, in a case where the plug 52 is made from porous silicon carbide, the lower limit thereof is preferably set to 1 mm, and the upper limit thereof is preferably set to 20 mm.
The length of the plug of less than 1 mm tends to cause a failure in positively plugging the end portion of the cell; in contrast, the length thereof exceeding 20 mm tends to cause a reduction in the effective filtration area in the honeycomb structured body.

In the aggregated honeycomb structured body 40, the sealing material layer (bonding material layer) 41, which is formed between the honeycomb units 50, has a function for preventing leakage of exhaust gases, and also serves as a bonding agent that combines a plurality of honeycomb units 50 with one another; in contrast, the sealing material layer (coat layer) 42, which is formed on the peripheral surface of the honeycomb block 43, functions as a sealing member for preventing exhaust gases passing through the cells from leaking from the peripheral surface of the honeycomb block 43, and also functions as a reinforcing member that adjusts the peripheral shape of the honeycomb block 43 and reinforces the peripheral portion thereof.

Here, in the aggregated honeycomb structured body 40, the bonding material layer 41 and the coat layer 42 may be made from the same material, or may be made from different materials. In a case where the bonding material layer 41 and the coat layer 42 are made from the same material, the compounding ratios of the material may be the same or different. Moreover, the material may be a dense material or a porous material.

With respect to the material forming the bonding material layer 41 and the coat layer 42, not particularly limited, examples thereof include an inorganic binder, an organic binder and a material made from inorganic fibers and/or inorganic particles.

With respect to the inorganic binder, for example, silica sol, alumina sol and the like may be used. Each of these may be used alone or two or more kinds of these may be used in combination. Among the inorganic binders, silica sol is more preferably used.

With respect to the organic binder, examples thereof include polyvinyl alcohol, methyl cellulose, ethyl cellulose, carboxymethyl cellulose, and the like. Each of these may be used alone or two or more kinds of these may be used in combination. Among the organic binders, carboxymethyl cellulose is more preferably used.

With respect to the inorganic fibers, examples thereof include ceramic fibers, made from alumina, silica, silica-alumina, glass, potassium titanate, aluminum borate or the like, and whiskers made from alumina, silica, zirconia, titania, ceria, mullite, silicon carbide or the like. Each of these may be used alone or two or more kinds of these may be used in combination. Among the inorganic fibers, alumina fibers are more preferably used.

With respect to the inorganic particles, examples thereof include carbides, nitrides, and the like and specific examples include inorganic powder or the like made from silicon carbide, silicon nitride and boron nitride. Each of these may be used alone, or two or more kinds of these may be used in combination. Among the inorganic particles, silicon carbide having superior thermal conductivity is preferably used.

Moreover, a pore-forming agent, such as balloons that are fine hollow spheres comprising oxide-based ceramics, spherical acrylic particles, graphite, and the like may be added to the paste used for forming the sealing material layer (bonding material layer and/or coat layer), if necessary.
With respect to the above-mentioned balloons, not particularly limited, for example, alumina balloons, glass micro-balloons, shirasu balloons, fly ash balloons (FA balloons), mullite balloons, and the like may be used. Among these, alumina balloons are more preferably used.

Moreover, a catalyst may be supported on the aggregated honeycomb structured body of the present invention. With respect to the catalyst, those catalysts described in the section of the laminated honeycomb structured body may be used.

In a case where a catalyst is supported on the aggregated honeycomb structured body, preferably, after the surface thereof has been coated with a catalyst supporting layer such as an alumina film, the catalyst is allowed to adhere thereto. With this arrangement, the specific surface area is increased so that the degree of dispersion of the catalyst is improved, thereby making it possible to increase the reaction points of the catalyst. Moreover, it is possible to prevent the catalyst metal from being sintered by using the catalyst supporting layer.

With respect to the material for the catalyst supporting layer, examples thereof include: oxide ceramic materials, such as alumina, titania, zirconia and silica.

The following description will discuss a method for manufacturing the aggregated honeycomb structured body.
First, a rectangular pillar-shaped ceramic molded body is manufactured through an extrusion-molding process by using the above-mentioned material paste mainly comprising a ceramic material.

With respect to the material paste, although not particularly limited, those material pastes, which allow the honeycomb unit after the manufacturing process to have a porosity in the range of 45 to 55%, are preferably used, and, for example, material pastes, formed by adding a binder, a dispersant and the like to powder made from the above-mentioned ceramic material, are listed.

With respect to the particle diameter of the ceramic powder, although not particularly limited, those which are less susceptible to shrinkage in the succeeding firing process are preferably used, and for example, mixed powder, prepared by combining 100 parts by weight of powder having an average particle diameter from 0.3 to 70 µm with 5 to 65 parts by weight of powder having an average particle diameter from 0.1 to 1.0 µm, is preferably used.
Moreover, the ceramic powder on which an oxidation treatment has been carried out may be used.

With respect to the above-mentioned binder, not particularly limited, examples thereof include: methylcellulose, carboxy methylcellulose, hydroxy ethylcellulose, polyethylene glycol, and the like.
In general, the compounding amount of the above-mentioned binder is preferably set to 1 to 15 parts by weight with respect to 100 parts by weight of the ceramic powder.

With respect to the above-mentioned dispersant solution, not particularly limited, for example, an organic solvent such as benzene, alcohol such as methanol, water, and the like may be used.
An appropriate amount of the above-mentioned dispersant solution is blended so as to set the viscosity of the material paste in a predetermined range.

After these ceramic powder, binder and dispersant solution have been mixed by using an attritor or the like, the resulting mixture is sufficiently kneaded by using a kneader or the like, and then extrusion-molded.

Moreover, a molding auxiliary may be added to the material paste, if necessary. With respect to the molding auxiliary, not particularly limited, examples thereof include: ethylene glycol, dextrin, fatty acid soap, fatty acid, polyvinyl alcohol, and the like.

Furthermore, a pore-forming agent, such as balloons that are fine hollow spheres comprising oxide-based ceramic materials, spherical acrylic particles, graphite, and the like may be added to the above-mentioned material paste, if necessary.
With respect to the above-mentioned balloons, not particularly limited, for example, alumina balloons, glass micro-balloons, shirasu balloons, fly ash balloons (FA balloons), mullite balloons, and the like may be used. Among these, alumina balloons are more preferably used.

Next, the ceramic molded body is dried by using a drying apparatus, such as a microwave drying apparatus, a hot-air drying apparatus, a dielectric drying apparatus, a reduced-pressure drying apparatus, a vacuum drying apparatus and a frozen drying apparatus, and the like to form a ceramic dried body. Next, a predetermined amount of sealing material paste that forms plugs is filled into ends on the outlet side of a group of cells on the inlet side and ends on the inlet side of a group of cells on the outlet side so that predetermined cells are sealed.

With respect to the plug material paste, although not particularly limited, those plug material pastes that allow the plugs formed through post processes to have a porosity in the range of 30 to 75% are preferably used, and, for example, the same material as that of the material paste may be used.
In this process, by adjusting the amount of paste to be filled, the length of the plug to be formed through the post processes can be adjusted.

Next, a degreasing process (for example, 200 to 500°C) and a firing process (for example, 1400 to 2300°C) is carried out on the honeycomb molded body under predetermined conditions, which has the plug material paste filled therein and has been dried, so that it is possible to manufacture a honeycomb unit 50 which is formed by a single sintered body as a whole, and has a structure in which: a plurality of cells are placed side by side in the longitudinal direction, with a cell wall interposed in between, and either one of ends of the cells is sealed.
With respect to the conditions of the degreasing and firing processes of the honeycomb molded body, conventional conditions that have been used upon manufacturing a filter made from a porous ceramic may be adopted.

Next, a bonding material paste to form a bonding material layer 41 is applied onto side faces of the honeycomb unit 50 with a uniform thickness to form a bonding material paste layer, and a laminating process for forming another honeycomb unit 50 on this bonding material paste layer is successively repeated so that an aggregated body of honeycomb units having a predetermined size is manufactured. Here, another method is proposed in which: in order to ensure a space between the honeycomb units 50, a gap holding member is bonded onto each honeycomb unit 50, and by combining a plurality of honeycomb units 50 through the gap holding members, an aggregated body is formed, and a bonding material paste is then injected into the spaces between the honeycomb units 50.
Here, with respect to the material forming the bonding material paste, the description thereof is omitted since the description has already been given.

Next, this aggregated body of honeycomb units is heated so that the bonding material paste layers are dried and solidified to form bonding material layers 41.
Next, a cutting process is carried out by using a diamond cutter or the like on the aggregated body of honeycomb units in which a plurality of honeycomb units 50 have been bonded to one another through the bonding material layers 41 so that a honeycomb block 43 in a round pillar (cylindrical) shape is manufactured.

Then, a coat layer 42 is formed on the outer circumference of the honeycomb block 43 by using the above-mentioned sealing material paste so that a honeycomb structured body 40 in which the coat layer 42 is formed on the outer circumference of a honeycomb block 43 in a round pillar (cylindrical) shape in which a plurality of honeycomb units 50 are combined with one another through the bonding material layers 41 is manufactured.

Thereafter, a catalyst is supported on the honeycomb structured body on demand. The supporting process of the catalyst may be carried out on the honeycomb units prior to being formed into an aggregated body.
In a case where a catalyst is supported thereon, an alumina film having a high specific surface area is preferably formed on the surface of the honeycomb structured body, and a co-catalyst and a catalyst such as platinum are applied onto the surface of the alumina film.

With respect to the method for forming the alumina film on the surface of the honeycomb structured body, for example, a method in which the honeycomb structured body is impregnated with a solution of a metal compound containing aluminum such as Al (NO₃)₃ and then heated, and a method in which the honeycomb structured body is impregnated with a solution containing alumina powder and then heated, are proposed.
With respect to the method for applying a co-catalyst to the alumina film, for example, a method in which the honeycomb structured body is impregnated with a solution of a metal compound containing a rare-earth element, such as Ce (NO₃)₃, and then heated is proposed.
With respect to the method for applying a catalyst thereto, for example, a method in which the honeycomb structured body is impregnated with a solution of diammine dinitro platinum nitric acid ([Pt(NH₃)₂(NO₂)₂]HNO₃, platinum concentration: 4.53% by weight) or the like, and then heated is proposed.
Moreover, a catalyst may be applied through a method in which after the catalyst has been preliminarily applied to alumina particles, the honeycomb structured body is impregnated with a solution containing the alumina powder bearing the catalyst applied thereto, and then heated.

Moreover, an oxide may be supported thereon without forming the alumina film. With respect to the oxide, examples thereof include: metal oxides, such as CeO₂, ZrO₂, FeO₂, Fe₂O₃, CuO, CuO₂, Mn₂O₃ and MnO, and composite oxides or the like, indicated by the composition formula AₙB₁₋ₙCO₃ (in the formula, A is La, Nd, Sm, Eu, Gd or Y, B is an alkali metal or alkali-earth metal, and C is Mn, Co, Fe or Ni) and the like. Each of these may be used alone, or two or more kinds of them may be used in combination.

In a case where the porosity and the thickness of the cell walls in the aggregated honeycomb structured body are changed, preferably, the change is made within the aforementioned preferable range. With respect to the specific method for changing the porosity, a method is proposed in which: upon manufacturing a honeycomb molded body, two kinds of honeycomb molded bodies which will have mutually different porosities after the firing process are preliminarily prepared, and these are bonded to each other in a state of the molded bodies. After the firing process, these may be bonded to each other through an inorganic bonding material or the like.

In a case where the thickness of the cell walls is changed as well, a method is proposed in which: a molded body of honeycomb units having thick cell walls are preliminarily prepared, and machining processes are carried out on these cells in a state of the molded body so as to change the thickness of the cell walls. The machining process may be carried out on the honeycomb units after the firing process.

The following description will discuss the integral honeycomb structured body.
The integral honeycomb structured body is designed in such a manner that, when the honeycomb structured body is divided into two portions on the gas inlet side and the gas outlet side, the apparent density on the gas inlet side is made different from the apparent density on the gas outlet side so as to provide the same apparent volume on any flat face in parallel with either of the end faces on the gas inlet side and on the gas outlet side.

The integral honeycomb structured body comprises a honeycomb structured body in which the entire honeycomb structured body is integrally formed without bonding materials or the like interpolated therein. Therefore, the integral honeycomb structured body may be regarded as a honeycomb structured body made of a single honeycomb unit that is used for constituting the aggregated honeycomb structured body. However, the size thereof is the same as that of the aggregated honeycomb structured body, and the shape is prepared as a shape required for the honeycomb structured body, that is, a round pillar (cylindrical) shape, an oval pillar shape or the like.

Therefore, the structure, required characteristics and the like thereof are virtually the same as those of the above-mentioned aggregated honeycomb structured body, and the manufacturing method thereof is also virtually the same as the method for manufacturing the honeycomb unit. However, a sealing material layer (coat layer) which is formed later may be formed on the periphery of a sintered body.
Here, since this comprises a ceramic material with a large capacity that is integrally formed, a material having a low expansion coefficient, which is less susceptible to cracks or the like, is preferably used, and, for example, cordierite, aluminum titanate, and the like is preferably used.

With respect to the method for forming this integral honeycomb structured body in such a manner as to make the apparent density on the gas inlet side and the apparent density on the gas outlet side different from each other, a method for changing the porosity and a method for changing the thickness of the cell walls are proposed in the same manner as in the aggregated honeycomb structured body, and the specific methods are the same as those of the aggregated honeycomb structured body.

In the integral honeycomb structured body of this kind, even when a forced regenerating process is carried out within a fixed time so as to dispose of PMs deposited on the inside of the filter (honeycomb structured body), the generation of a temperature difference in the longitudinal direction (direction from the gas inlet side to the gas outlet side) can be restrained by making the quantity of generated heat smaller, thereby making it possible to prevent the generation of damages such as melting loss (molten erosion) and cracks in the honeycomb structured body.

With respect to the applications of the honeycomb structured body of the present invention, not particularly limited, for example, it is used for an exhaust gas purifying device for vehicles.

The following description will discuss an exhaust gas purifying device of a sixth aspect of the present invention, in which the above-mentioned honeycomb structured body is used.
The exhaust gas purifying device of the sixth aspect of the present invention comprises the honeycomb structured body of the first aspect of the present invention installed in an exhaust gas passage.

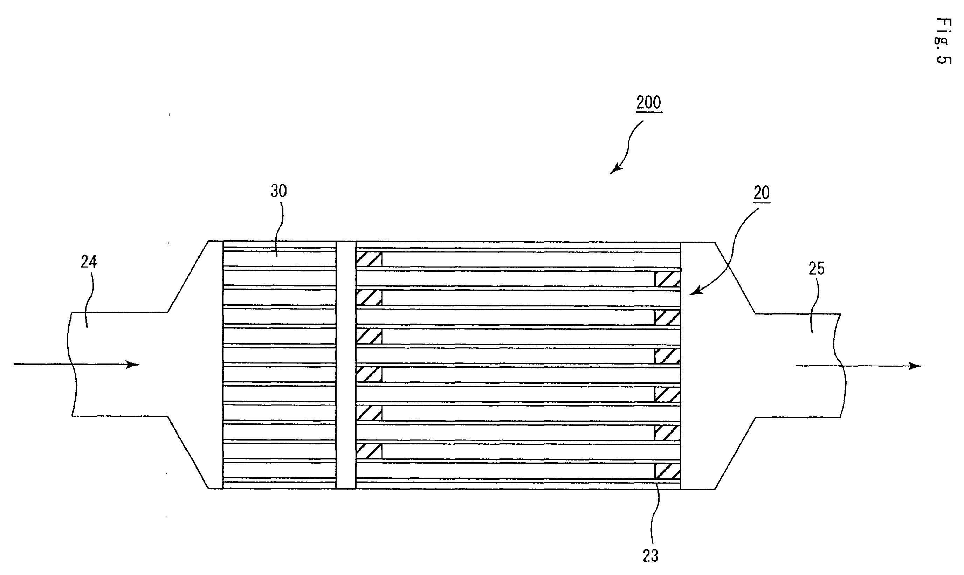

Fig. 5 is a cross-sectional view that schematically shows one example of an exhaust gas purifying device for vehicles, in which the honeycomb structured body of the first aspect of the present invention is installed.

As shown in Fig. 5, an exhaust gas purifying device 200 is mainly constituted by a honeycomb structured body 20 and a metal casing 23 that covers the honeycomb structured body 20 from outside, and an introducing pipe 24 coupled to an internal combustion system, such as an engine, is connected to the end portion on the side of the metal casing 23 to which exhaust gases are introduced, an exhaust pipe 25 coupled to the outside is connected to the other end portion of the metal casing 23. Here, in Fig. 5, a catalyst supporting member 30, which is an optional component, is indicated so as to be located on the upstream side of the honeycomb structured body 20 with respect to the exhaust gas passage inside the metal casing 23. A noble metal catalyst such as platinum, palladium and rhodium is supported on this catalyst supporting member 30. Here, arrows indicate flows of the exhaust gases.

In the exhaust gas purifying device 200, exhaust gases, discharged from an internal combustion system such as an engine, are introduced into the metal casing 23 through the introducing pipe 24, and after having passed through the inside of the catalyst supporting member 30, the resulting gases are allowed to flow into the honeycomb structured body 20 from the gas inlet side cells, and after PMs have been collected and purified upon passing through the cell walls, the purified gases are discharged out of the honeycomb structured body from the gas outlet side cells, and then externally discharged through the exhaust pipe 25.

When the exhaust gases are allowed to pass through the inside of the catalyst supporting member 30, toxic components such as CO, HC and NOx in the exhaust gases can be converted. Moreover, when the exhaust gases are allowed to pass through the inside of the catalyst supporting member 30 on which a catalyst that assists burning of PMs is supported, PMs are more easily burned in the honeycomb structured body 20, and efficiently removed therefrom.

In the exhaust gas purifying device of the present invention, the honeycomb structured body in which, when the honeycomb structured body is divided into two portions, the apparent density on the gas inlet side is made different from the apparent density on the gas outlet side so as to provide the same apparent volume, is installed, it becomes possible to efficiently restrain the generation of a temperature difference in the lamination direction due to burning of PMs, to prevent the subsequent occurrence of cracks, and the like and consequently to effectively purify the PMs contained in exhaust gases.

### EXAMPLES

The following description will discuss the present invention in more detail by means of examples; however, the present invention is not limited only by these examples.

### (I) Productions of piling members A to G

### (a) Production of inorganic-fiber piling member A

### (1) Preparing process for a sheet-forming slurry

First, 50 parts by weight of alumina fibers, 50 parts by weight of glass fibers (average fiber diameter: 9 µm, average fiber length: 3 mm) and 10 parts by weight of an organic binder (polyvinyl alcohol-based fibers) were sufficiently dispersed in a sufficient amount of water, and this is sufficiently stirred to prepare a sheet-forming slurry.

### (2) Sheet-forming process and cell-forming process

A sheet-forming process was carried out on the slurry, obtained in the process (1), by using a mesh having a diameter of 143 mm, and the resulting matter was dried at a temperature of 135°C so that a sheet-shaped inorganic composite member was obtained.
Next, a punching process was carried out on the sheet-shaped inorganic composite member so that cells, which had a cell density of 12.4 cells/cm² (80 cells/inch²) and a thickness of the cell wall (cell interval) of 1.1 mm, were formed on the entire surface thereof (aperture ratio: 37.5%).

### (3) Heating treatment process

A heating treatment was carried out on the sheet-shaped inorganic composite member under pressure, obtained in the process (2), at 950°C for one hour so that an inorganic fiber piling member was obtained. Here, through this process, the alumina fibers were mutually adhered with one another through glass.

### (4) Acid treatment and quenching treatment

An acid treatment, in which it was immersed in a HCl solution of 4 mol/L at 90°C for one hour, is carried out on the inorganic-fiber piling member obtained in the process (3), and a quenching treatment was further carried out thereon under conditions of 1050°C for 5 hours.
Thus, an inorganic-fiber piling member A (aperture ratio: 37.5%) having a porosity of 95% and a thickness of 1 mm was formed.

### (b) Productions of inorganic-fiber piling members B to D

In accordance with the preparation sequence of the inorganic-fiber piling member A, by adjusting the degree of a pressure in the heating treatment process (3), inorganic-fiber piling members B and C (aperture ratio: 37.5%) respectively having porosities of 90% and 80% were formed, and by adjusting the intervals of the cells upon conducting the punching operation in the process (2), an inorganic-fiber piling member D (aperture ratio: 29.4%) having a thickness of the cell walls of 1.3 mm and a porosity of 90% was formed.

### (c) Productions of metal piling members E to G

After each of three-dimensional network metal porous members of Ni-Cr-W-based alloy (trade name: MA 23 made by Mitsubishi Material Co., Ltd., average pore diameter: 35 µm, porosities of three types: 90%, 80% and 70%, thickness: 1mm) had been machined into a disc shape of 143 mm in diameter, a laser beam machining treatment was carried out on the resulting member so that cells, which had a cell density of 12.4 cells/cm² (80 cells/inch²) and a thickness of the cell wall (cell interval) of 1.1 mm, were formed on the entire surface thereof; thus, metal piling members A to G were manufactured.
Physical properties and the like of the respective piling members A to G are shown in Table 1.

**[Table 1]**

| Piling members | Material | True density [g/cm³] | Porosity [%] | Thickness [mm] | Cell wall thickness [mm] | Cell density [cpsi] | Aperture ratio [%] |
|---|---|---|---|---|---|---|---|
| A | Inorganic fibers | 2.78 | 95 | 1 | 1.1 | 80 | 37.5 |
| B | Inorganic fibers | 2.78 | 90 | 1 | 1.1 | 80 | 37.5 |
| C | Inorganic fibers | 2.78 | 80 | 1 | 1.1 | 80 | 37.5 |
| D | Inorganic fibers | 2.78 | 90 | 1 | 1.3 | 80 | 29.4 |
| E | Metal | 8.97 | 90 | 1 | 1.1 | 80 | 37.5 |
| F | Metal | 8.97 | 80 | 1 | 1.1 | 80 | 37.5 |
| G | Metal | 8.97 | 70 | 1 | 1.1 | 80 | 37.5 |

### (II) Production of piling members for an end portion (metal plate-shaped member)

After a metal plate of Ni-Cr alloy had been machined into a disc shape of 143 mm in diameter x 1 mm in thickness, a laser beam machining treatment was carried out on the resulting member so that cells, which had a checkered pattern with a cell density of about 6.2 cells/cm² (40 cells/inch²) and a cell wall thickness (cell interval) of 2.0 mm, were formed thereon; thus, a piling member for an end portion (metal plate-shaped member) was manufactured.
Here, since the cells of the piling member for an end portion were formed into a checkered pattern, the cell density thereof is virtually half of each of the piling members A to G.

### (III) Production of a partition plate

The same processes as the above-mentioned process (II) of the piling member for an end portion were carried out, except that cells, which had a cell density of 12.4 cells/cm² (80 cells/inch²) and a thickness of the cell wall (cell interval) of 1.1 mm, were formed on the entire surface thereof so that a partition plate was manufactured.

### (IV) Supporting process of a catalyst onto piling members

First, LaCoO₃ was supported on each of the various piling members as an oxide catalyst. To an ethanol solvent were added 0.01 mol of La (NO₃)₃·6H₂O, 0.01 mol of Co (OCOCH₃)₂·4H₂O and 0.024 mol of C₆H₈O₇·H₂O (citric acid) at a rate of 20 ml, and this was mixed and stirred to prepare a LaCO₃ precursor sol. A honeycomb structured body was immersed in this sol, and after having been taken out, a suction process was carried out thereon so that the excessive sol was removed therefrom, and dried at 100°C and a firing process was carried out at 600°C for one hour.
Here, it was confirmed through X-ray diffraction measurements that there was a perovskite structure of LaCoO₃.
A honeycomb structured body was manufactured by using the piling members on which the catalyst had been supported.

### (Example 1)

First, a metal casing (cylinder-shaped metal container) with metal members used for pressing attached to the gas inlet side thereof, was placed with the side having the metal members attached thereto facing down. Moreover, after one piling member (metal plate-shaped member), obtained in the process (II), had been laminated thereon, 35 of the inorganic fiber piling members A obtained in the process (I) were laminated thereon (lamination length: 35 mm), and one partition plate obtained in the process (III) was laminated thereon; thus, the partition plate was secured onto the metal casing with the fixing members.
Next, 53 of the inorganic fiber piling members C were laminated on the partition plate (lamination length at this time: 53 mm), and these piling members were compressed to a lamination length of 35 mm, and lastly, one piling member for an end portion (metal plate-shaped member) was laminated thereon; thereafter, metal members used for securing were attached and secured to the gas outlet side as well, so that a honeycomb structured body having a total lamination length of 70 mm, which had varied apparent densities in two stages, was obtained. In the honeycomb structured body in Example 1, there were two areas having different apparent densities, and these areas were properly arranged so that if the honeycomb structured body was divided into two portions, the respective two portions would have the same apparent volume.

The porosity on the gas inlet side was 95% with an apparent density of 0.0869 (g/cm³) , while the porosity on the gas outlet side was 70% with an apparent density of 0.521 (g/cm³). Consequently, the ratio of the apparent density on the gas outlet side to the apparent density on the gas inlet side was 6.00. Here, the respective piling members were laminated so that the cells were superposed on one after another in all the lamination processes.

### (Examples 2 to 8)

The same processes as those of Example 1 were basically carried out, and by adjusting the lamination number of the inorganic fiber piling members and the degree of compression, honeycomb structured bodies, each having a laminated structure with varied apparent densities of two stages, as shown in Table 2, were manufactured.
Here, in each of the honeycomb structured bodies of Examples 2 to 8, the minimum value of the ratio of the apparent density was 1.10, and the maximum value thereof was 3.00.

### (Example 9)

In accordance with basically the same sequence of processes as Example 1, by adjusting the lamination number of the inorganic fiber piling members and the degree of compression, a honeycomb structured body having a laminated structure with varied apparent densities in three stages, each having a lamination length of 23 mm, as shown in Table 2, was manufactured. Here, since the gas inlet side and the gas outlet side are discriminated as two equally divided portions of the honeycomb structured body by a plane in parallel with the lamination face of the piling members, there is a border between the gas inlet side and the gas outlet side at the middle point in the lamination direction of the lamination aggregate on the second stage, in the present example.
The ratio of apparent densities in the honeycomb structured body of Example 9 was set to 2.00.

### (Example 10)

In the same manner as in Example 9, by adjusting the lamination number of the inorganic fiber piling members and the degree of compression, a honeycomb structured body having a laminated structure with varied apparent densities of four stages, each having a lamination length of 17 mm, as shown in Table 2, was manufactured.
The ratio of apparent densities in the honeycomb structured body of Example 10 was also set to 2.00.

### (Examples 11 to 14)

In each of Examples 11 to 14, a honeycomb structured body was manufactured by using piling members having different porosities on the gas inlet side and on the gas outlet side. In other words, as shown in Table 2, piling members having a lower porosity as compared with those on the gas inlet side were laminated on the gas outlet side so that a laminated structure (lamination total length: 70 mm) having a higher apparent density on the gas outlet side was obtained.
The same sequence of manufacturing processes as Example 1 was carried out except that the piling members were not compressed and that no partition plate was laminated.
With respect to the ratio of apparent densities obtained in each of Examples 11 to 14, the ratio was 2.00 in Examples 11 to 13, and the ratio was 1.50 in Example 14.

### (Example 15)

In Example 15, a honeycomb structured body was manufactured by using piling members having different thicknesses of cell walls on the gas inlet side and on the gas outlet side. In other words, as shown in Table 2, piling members having a thicker cell wall as compared with those on the gas inlet side were laminated on the gas outlet side so that a laminated structure (lamination total length: 70 mm) having a higher apparent density on the gas outlet side was obtained.
The same sequence of manufacturing processes as Example 1 was carried out, except that the piling members were not compressed and that no partition plate was laminated.
The ratio of apparent densities obtained in Example 15 was 1.13.

### (Reference Examples 1 and 2)

In accordance with basically the same processes as Example 1, by adjusting the lamination number of the inorganic fiber piling members and the degree of compression, a honeycomb structured body having a laminated structure with varied apparent densities of two stages, as shown in Table 2, was manufactured.
In the honeycomb structured bodies of Reference Examples 1 and 2, the ratios of apparent densities were respectively 1.05 and 8.00.

### (Comparative Examples 1 to 4)

In each of Comparative Examples 1 to 4, by carrying out basically the same processes as Example 1, a honeycomb structured body, which had no difference in apparent density between the gas inlet side and the gas outlet side, that is, had a ratio of apparent densities of 1.00, was manufactured. In other words, in Comparative Examples 1 to 3, the lamination number and the degree of compression of the piling members were varied in the lamination structure of one stage, and in Comparative Example 4, the lamination structures on the first stage and the second stage were made identical to each other. Here, in the Comparative Examples 1 to 3, no partition plate was laminated.

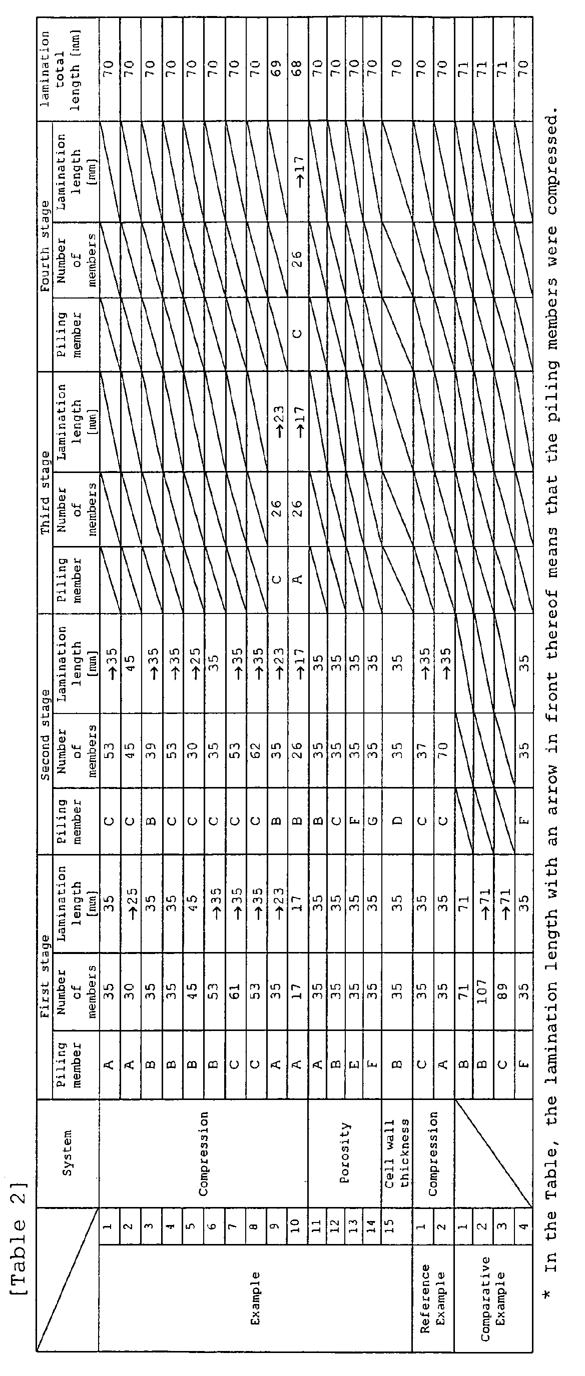

### (Evaluation)

### (1) Evaluation method

Canning of a laminated honeycomb structured body was carried out by installing and securing thereof into a metal casing, and the canned laminated honeycomb structured body was placed in an exhaust gas passage with a distance of 0.5 mm from a diesel engine of 2 L. After the installation, while the diesel engine was continuously being driven at the speed of revolutions of 3000 rpm with a torque of 50 Nm for 24 hours, PMs were collected (continuous regeneration by the catalyst). Thereafter, the PMs deposited inside the filter were forcedly regenerated through post-injection. Then, the filter was removed, and the piling members were visually observed, and evaluated based upon the following criteria. The results are shown in Table 3. Here, with respect to all the filters, the leak of PMs was measured on the rear side of each filter by using a particulate matter counter, and no leak was found.

### Evaluation criteria

○: No damage in the cell walls was confirmed.
Δ: Some of the cell walls became slightly thinner.
x: Damages in the cell walls were confirmed.

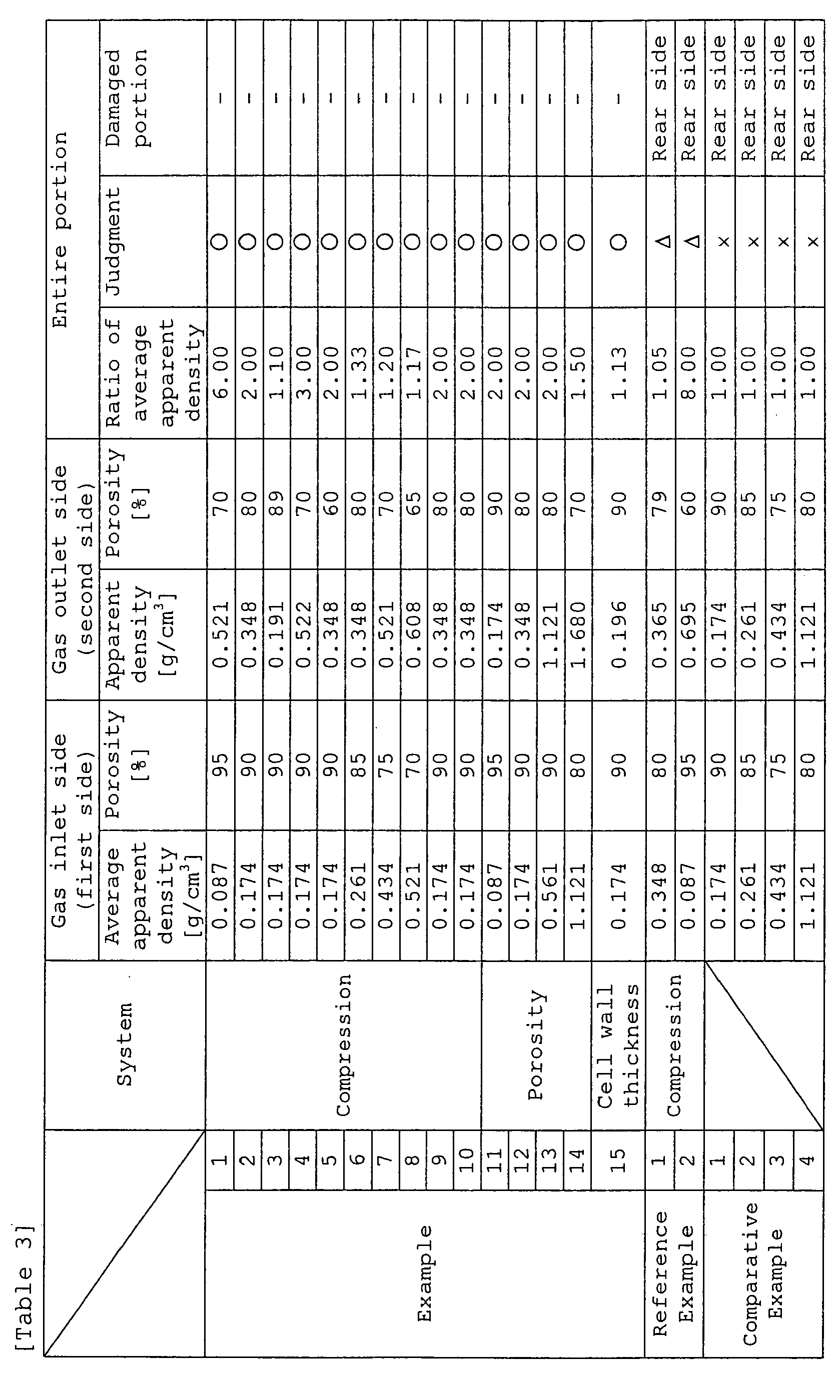

As shown in Table 3, since the apparent density on the gas inlet side was made different from the apparent density on the gas outlet side, no damages in the cell walls were confirmed in the honeycomb structured bodies manufactured in Examples. In contrast, in the honeycomb structured bodies manufactured in Comparative Examples, damages in the cell walls were confirmed.
In this manner, in the honeycomb structured bodies manufactured through the methods for manufacturing a honeycomb structured body relating to the second, third and fourth aspects of the present invention, since the apparent density on the gas inlet side is made different from the apparent density on the gas outlet side, it becomes possible to effectively prevent damages in the cell walls, in any one of the modes of causing a difference in apparent densities that relate to the compression, porosity and thickness of each cell wall.

Additionally, although the honeycomb structured body manufactured in Reference Example has not had damages in the cell walls, it was confirmed that some portions in the cell walls became slightly thinner. This is presumably because the honeycomb structured body of Reference Example 1 had no significant difference in the difference between apparent densities thereof, and because the honeycomb structured body of Reference Example 2 had such a big difference between apparent densities thereof. Taking these into consideration, a ratio of the apparent density on the gas inlet side to the apparent density on the outlet side is preferably set in the range of 1.1 to 6.0.

### BRIEF DESCRIPTION OF THE DRAWINGS

Figs. 1(a) to 1(f) are drawings that indicate, as two-dimensional graphs, modes in which the structural properties of piling members are varied so that apparent densities on the gas inlet side and the gas outlet side of a honeycomb structured body in accordance with the present invention are made different from each other. In Figs. 1 (a) to 1(f), the position 1 (distance 1) from the end of the gas inlet side in the lamination direction is defined as the horizontal axis and the structural property P (the value of which is defined as p) at an arbitral position 1 is defined as the longitudinal axis; thus, the relationship between the position 1 and the structural property p is plotted.
Figs. 2 (a) to 2 (d) are perspective projection views that schematically show respective honeycomb structured bodies each of which is divided into two portions on the gas inlet side and the gas outlet side so as to make apparent volumes thereof equal to each other, in a case where the lamination directions of piling members constituting each of the laminated honeycomb structured bodies of the present invention are different from one another.
Fig. 3 (a) is a perspective view that schematically shows one example of a laminated honeycomb structured body of the present invention, and Fig. 3 (b) is a cross-sectional view taken along line A-A of Fig. 3(a).
Fig. 4 (a) is a perspective view that schematically shows each of the piling members that form the laminated honeycomb structured body of the present invention, and Fig. 4(b) is a perspective view that shows a state in which the piling members, as shown in Fig. 4 (a), are laminated to manufacture a honeycomb structured body.
Fig. 5 is a cross-sectional view that schematically shows one example of an exhaust gas purifying device in accordance with the present invention.
Fig. 6 is a perspective view that schematically shows one example of an aggregated honeycomb structured body in accordance with the present invention.
Fig. 7 (a) is a perspective view that schematically shows a honeycomb unit that forms an aggregated honeycomb structured body in accordance with the present invention, and Fig. 7(b) is a cross-sectional view taken along line B-B of Fig. 7(a).

### EXPLANATION OF SYMBOLS

- 10, 20,: 40 Honeycomb structured body
- 10a: Piling member
- 10b: Piling member for an end portion
- 10c: Partition plate
- 10d: Fixing member
- 11, 51: Cell
- 13, 53: Cell wall
- 200: Exhaust gas purifying device
- 23: Metal casing
- 24: Introducing pipe
- 25: Exhaust pipe
- 30: Catalyst supporting member
- 41: Sealing material layer (Bonding material layer)
- 42: Sealing material layer (Coat layer)
- 43: Ceramic block
- 50: Honeycomb unit
- 52: Plug

## Claims

1. A pillar-shaped honeycomb structured body in which a plurality of cells, separated from each other by a cell wall, are formed in a longitudinal direction,
wherein
when said honeycomb structured body is divided into two portions by a plane in parallel with either one of end faces of said honeycomb structured body in the longitudinal direction so that apparent volumes of the respective two portions become equal to each other, said respective two portions have apparent densities different from each other.

2. The honeycomb structured body according to claim 1,
wherein
a ratio of the apparent density of one of said two portions to the apparent density of the other of said two portions is set in the range of 1:1.1 to 1:6.0.

3. The honeycomb structured body according to claim 1 or 2,
wherein
a catalyst is supported thereon.

4. The honeycomb structured body according to any of claims 1 to 3,
wherein
said honeycomb structured body mainly comprises inorganic fibers and/or metal.

5. The honeycomb structured body according to any of claims 1 to 3,
further comprising:
a plurality of piling members, each having a plurality of cells separated from each other by a cell wall,
wherein
said honeycomb structured body is constituted by said piling members laminated so that corresponding cells are superposed on one after another.

6. The honeycomb structured body according to any of claims 1 to 5,
wherein
one of said two portions has a porosity in the range of 75 to 95% while the other of said two portions has a porosity in the range of 70 to 90%, and the porosity of said one of said two portions is more than the porosity of said the other of said two portions.

7. The honeycomb structured body according to claim 5 or 6,
wherein
said piling member includes a piling member mainly comprising inorganic fibers and/or a piling member mainly comprising metal.

8. The honeycomb structured body according to claim 4 or 7,
wherein
a member for an end portion having cells formed into a checkered pattern is placed on each of two ends of said honeycomb structured body.

9. The honeycomb structured body according to claim 1,
wherein
a gas is allowed to pass through an inside thereof,
one of said two portions is on a gas inlet side while the other of said two portions is on a gas outlet side, and
a ratio of the apparent density on said gas inlet side to the apparent density on said gas outlet side is set in the range of 1:1.1 to 1:6.0.

10. The honeycomb structured body according to claim 9,
wherein
a catalyst is supported thereon.

11. The honeycomb structured body according to claim 9 or 10,
wherein
said honeycomb structured body mainly comprises inorganic fibers and/or metal.

12. The honeycomb structured body according to claim 9 or 10,
further comprising:
a plurality of piling members, each having a plurality of cells separated from each other by a cell wall,
wherein
said honeycomb structured body is constituted by said piling members laminated so that corresponding cells are superposed on one after another.

13. The honeycomb structured body according to any one of claims 9 to 12,
wherein
the portion on said gas inlet side has a porosity in the range of 75 to 95% while the other portion on said gas outlet side has a porosity in the range of 70 to 90%, and the porosity of the portion on said gas inlet side is more than the porosity of the other portion on said gas outlet side.

14. The honeycomb structured body according to claim 12 or 13,
wherein
said piling member includes a piling member mainly comprising inorganic fibers and/or a piling member mainly comprising metal.

15. The honeycomb structured body according to claim 11 or 14,
wherein
a member for an end portion having cells formed into a checkered pattern is placed on each of two ends of said honeycomb structured body.

16. A method for manufacturing a honeycomb structured body comprising:
preparing a plurality of piling members, each having a plurality of cells separated from each other by a cell wall; and
laminating said piling members so that corresponding cells of respective piling members are superposed on one after another,
wherein
before the lamination and/or after the lamination of said piling members, by compressing at least one portion of said piling members, the honeycomb structured body according to any of claims 5, 6, 7, 8, 12, 13, 14 and 15 is manufactured.

17. A method for manufacturing a honeycomb structured body comprising:
preparing a plurality of piling members, each having a plurality of cells separated from each other by a cell wall; and
laminating said piling members so that corresponding cells of respective piling members are superposed on one after another,
wherein
upon laminating said piling members, by laminating the piling members having a different porosity as at least one portion of said piling members, the honeycomb structured body according to any of claims 5, 6, 7, 8, 12, 13, 14 and 15 is manufactured.

18. A method for manufacturing a honeycomb structured body comprising:
preparing a plurality of piling members, each having a plurality of cells separated from each other by a cell wall; and
laminating said piling members so that corresponding cells of respective piling members are superposed on one after another, wherein
upon laminating said piling members, by laminating the piling members having a different thickness of cell walls as at least one portion of said piling members, the honeycomb structured body according to any of claims 5, 6, 7, 8, 12, 13, 14 and 15 is manufactured.

19. A method for manufacturing a honeycomb structured body comprising:
preparing a pillar-shaped honeycomb member in which a plurality of cells, separated from each other by a cell wall, are formed in a longitudinal direction; and
compressing at least one portion of said pillar-shaped honeycomb member so that the honeycomb structured body according to any of claims 4, 6, 11, 13 and 15 is manufactured.

20. An exhaust gas purifying device comprising:
the honeycomb structured body according to any of claims 1 to 19 installed in an exhaust gas passage.
